# EUROPEAN PATENT APPLICATION

(11) **EP 4 852 599 A2**
(43) Date of publication of application: **09.12.2026**
(21) Application number: 26214537.8
(22) Date of filing: 16.02.2023
(51) Int. Cl.: H04W 74/0836

(54) **METHOD AND DEVICES FOR RECEIVING AND TRANSMITTING INFORMATION**

(30) Priority: 18.02.2022 CN 202210149614
(62) Document number(s) of the earlier application(s) in accordance with Art. 76 EPC: 25191301.8 / 4 615 144; 23756656.7 / 4 464 097
(71) Applicant: Samsung Electronics Co., Ltd., Suwon-si, Gyeonggi-do 16677 (KR)
(72) Inventor: YU, Bin, 16677 Suwon-si (KR); SUN, Feifei, 16677 Suwon-si (KR)
(74) Representative: Nederlandsch Octrooibureau

(57) **Abstract**

The disclosure relates to a 5G or 6G communication system for supporting a higher data transmission rate.

The present disclosure provides a method and device for receiving and transmitting information. According to an aspect of the present disclosure, a method for a network device is provided, which includes transmitting cell configuration information to a terminal device, wherein the cell configuration information includes a first downlink configuration information and a first uplink configuration information, and also includes at least one of a second uplink configuration information and a second downlink configuration information. The first uplink and the first downlink are related in frequency domain; wherein the second uplink satisfies at least one of the following conditions: the second uplink and the first downlink are related in frequency domain; the second uplink and the first uplink are related in frequency domain, wherein the second downlink satisfies at least one of the following conditions: the second downlink and the first downlink are related in frequency domain; the second downlink and the second uplink are related in frequency domain, and receiving, from the terminal device, an uplink signal transmitted by the terminal device based on the cell configuration information.

## Description

### [Technical Field]

The present application relates to the technical field of wireless communication, and more particularly to a method and a device for receiving and transmitting information.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

In order to meet the increasing demand for wireless data communication services since the deployment of 4G communication systems, efforts have been made to develop improved 5G or pre-5G communication systems. Therefore, 5G or pre-5G communication systems are also called "Beyond 4G networks" or "Post-LTE systems".

In order to achieve a higher data rate, 5G communication systems are implemented in higher frequency (millimeter, mmWave) bands, e.g., 60 GHz bands. In order to reduce propagation loss of radio waves and increase a transmission distance, technologies such as beamforming, massive multiple-input multiple-output (MIMO), full-dimensional MIMO (FD-MIMO), array antenna, analog beamforming and large-scale antenna are discussed in 5G communication systems.

In addition, in 5G communication systems, developments of system network improvement are underway based on advanced small cell, cloud radio access network (RAN), ultra-dense network, device-to-device (D2D) communication, wireless backhaul, mobile network, cooperative communication, coordinated multi-points (CoMP), reception-end interference cancellation, etc.

In 5G systems, hybrid FSK and QAM modulation (FQAM) and sliding window superposition coding (SWSC) as advanced coding modulation (ACM), and filter bank multicarrier (FBMC), non-orthogonal multiple access (NOMA) and sparse code multiple access (SCMA) as advanced access technologies have been developed.

Transmission from base station to User Equipment (UE) is referred as downlink, and transmission from UE to base station is referred as uplink.

### [Disclosure of Invention]

### [Technical Problem]

The present disclosure provides a method and device for receiving and transmitting information, which can improve the performance of XDD system.

### [Solution to Problem]

According to an aspect of the present disclosure, a method performed by a network device is provided, which includes:
transmitting cell configuration information to the terminal device,
wherein the cell configuration information includes a first downlink configuration information and a first uplink configuration information, and also includes at least one of a second uplink configuration information and a second downlink configuration information; wherein,
the first downlink configuration information is for configuring a first downlink;
the first uplink configuration information is for configuring a first uplink;
the second uplink configuration information is for configuring a second uplink;
the second downlink configuration information is for configuring a second downlink;
wherein the first uplink and the first downlink are related in frequency domain;
wherein the second uplink satisfies at least one of the following conditions:
   the second uplink and the first downlink are related in frequency domain;
   the second uplink and the first uplink are related in frequency domain,
wherein the second downlink satisfies at least one of the following conditions:
   the second downlink and the first downlink are related in frequency domain;
   the second downlink and the second uplink are related in frequency domain,
      receiving, from the terminal device, an uplink signal transmitted by the terminal device based on the cell configuration information.

Optionally, the second uplink and the first downlink being related in frequency domain comprises at least one of the following:
the second uplink and the first downlink correspond to a same reference point in frequency domain;
the frequency band of the second uplink is related to the frequency band of the first downlink;
the second uplink is related to the carrier bandwidth of the first downlink.

Optionally, the second uplink and the first uplink being related in frequency domain comprises at least one of the following:
the second uplink and the first uplink correspond to a same reference point in frequency domain;
the frequency band of the second uplink is related to the frequency band of the first uplink;
the second uplink is related to the carrier bandwidth of the first uplink.

Optionally, the second uplink is related to cross division duplex (XDD); or, the second uplink is related to subband non-overlapping full duplex.

Optionally, the first uplink is related to one or more bandwidth parts (BWP); the second uplink is related to one or more bandwidth parts (BWP).

Optionally, the method further comprises: through indication signaling, the network device also avoids simultaneous transmission of physical uplink shared channel (PUSCH) on the first uplink and the second uplink.

Optionally, the method further comprises: through indication signaling, the network device also avoids simultaneous transmission of physical uplink control channel PUCCH on the first uplink and the second uplink.

Optionally, the method further comprises: the network device configures random access channel (RACH) parameters in the first uplink and/or the second uplink.

Optionally, the method further comprises: the network device configures the maximum output power of the terminal on first uplink to be the same as the maximum output power of the terminal on the second uplink.

Optionally, the second downlink and the first downlink being related in frequency domain comprises at least one of the following:
the second downlink and the first downlink correspond to a same reference point in frequency domain;
the frequency band of the second downlink is related to the frequency band of the first downlink;
the second downlink is related to the carrier bandwidth of the first downlink.

Optionally, the second downlink and the second uplink being related in frequency domain comprises at least one of the following:
the second downlink and the second uplink correspond to a same reference point in frequency domain;
the frequency band of the second downlink is related to the frequency band of the second uplink;
the second downlink is related to the carrier bandwidth of the second uplink.

Optionally, the second downlink is related to cross division duplex (XDD); or, the second downlink is related to subband non-overlapping full duplex.

Optionally, the second downlink is related to one or more bandwidth parts (BWP).

According to another aspect of the present application, a network device including a transceiver, and a controller coupled with the transceiver and configured to perform the above-mentioned method for the network device is provided.

According to yet another aspect of the present disclosure, a method for a terminal device is provided, which includes:
receiving cell configuration information from a network device, wherein the cell configuration information includes a first downlink configuration information and a first uplink configuration information, and also includes at least one of a second uplink configuration information and a second downlink configuration information; wherein,
the first downlink configuration information is for configuring a first downlink;
   the first uplink configuration information is for configuring a first uplink;
   the second uplink configuration information is for configuring a second uplink;
   the second downlink configuration information is for configuring a second downlink;
wherein the first uplink and the first downlink are related in frequency domain;
wherein the second uplink satisfies at least one of the following conditions:
   the second uplink and the first downlink are related in frequency domain;
   the second uplink and the first uplink are related in frequency domain,
      wherein the second downlink satisfies at least one of the following conditions:
      the second downlink and the first downlink are related in frequency domain;
the second downlink and the second uplink are related in frequency domain
   based on the cell configuration information, transmitting an uplink signal to the network device.

Optionally, the second uplink is related to cross division duplex (XDD); or, the second uplink is related to subband non-overlapping full duplex.

Optionally, the second downlink is related to cross division duplex (XDD); or, the second downlink is related to subband non-overlapping full duplex.

Optionally, the first uplink is related to one or more bandwidth parts (BWP); the second uplink is related to one or more bandwidth parts (BWP).

Optionally, the second downlink is related to one or more bandwidth parts (BWP).

Optionally, the method further comprises: the terminal device determines the frequency domain information of the second uplink according to the frequency domain information of the first downlink.

Optionally, the terminal device determining the frequency domain information of the second uplink according to the frequency domain information of the first downlink comprises at least one of the following:
the terminal device determines the reference point in frequency domain for the second uplink according to the reference point in frequency domain for the first downlink;
the terminal device determines the frequency band of the second uplink according to the frequency band of the first downlink;
the terminal device determines the carrier bandwidth of the second uplink according to the carrier bandwidth of the first downlink.

Optionally, the method further comprises: the terminal device determines the frequency domain information of the second uplink according to the frequency domain information of the first uplink.

Optionally, the terminal device determining the frequency domain information of the second uplink according to the frequency domain information of the first uplink comprises at least one of the following:
the terminal device determines the reference point in frequency domain for the second uplink according to the reference point in frequency domain for the first uplink;
the terminal device determines the frequency band of the second uplink according to the frequency band of the first uplink;
the terminal device determines the carrier bandwidth of the second uplink according to the carrier bandwidth of the first uplink.

Optionally, the method further comprises: a first resource is for transmitting a first uplink signal or channel on the first uplink; a second resource is for transmitting a second uplink signal or channel on the second uplink; and, in the case that the first resource and the second resource overlap in the time domain, the terminal device performs at least one of the following operations:
transmitting a first uplink signal or channel;
transmitting a second uplink signal or channel;
dropping/not transmitting the first uplink signal or channel;
dropping/not transmitting the second uplink signal or channel;
multiplexing uplink control information (UCI) corresponding to the first uplink signal or channel with the UCI corresponding to the second uplink signal or channel.

Optionally, the method further comprises: the terminal device performs random access procedure on the first uplink or the second uplink.

Optionally, the method further comprises: the terminal device calculates a radio network temporary identifier (RNTI) related to a random access channel (RACH) in association with the second uplink.

Optionally, the method further comprises: the terminal device determines the transmission power for the uplink signal or uplink channel on the second uplink based on the maximum output power of the terminal on the first uplink.

Optionally, the method further comprises: the terminal device determines the frequency domain information of the second downlink according to the frequency domain information of the first downlink.

Optionally, the terminal device determining the frequency domain information of the second downlink comprises at least one of following:
the terminal device determines the reference point in frequency domain for the second downlink according to the reference point in frequency domain for the first downlink;
the terminal device determines the frequency band of the second downlink according to the frequency band of the first downlink;
the terminal device determines the carrier bandwidth of the second downlink according to the carrier bandwidth of the first downlink.

Optionally, the method further comprises: the terminal device determines the frequency domain information of the second downlink according to the frequency domain information of the second uplink.

Optionally, the terminal device determining the frequency domain information of the second downlink according to the frequency domain information of the second uplink comprises at least one of the following:
the terminal device determines the reference point in frequency domain for the second uplink according to the reference point in frequency domain for the second uplink;
the terminal device determines the frequency band of the second downlink according to the frequency band of the second uplink;
the terminal device determines the carrier bandwidth of the second downlink according to the carrier bandwidth of the second uplink.

According to another aspect of the present application, a terminal device, including a transceiver, and a controller coupled with the transceiver and configured to perform the above-mentioned method for the terminal device is provided.

### [Advantageous Effects of Invention]

Embodiments of the present disclosure provides methods and apparatus for configuring first downlink configuration, first uplink configuration, second uplink configuration and second downlink configuration to improve the performance of XDD system.

### [Brief Description of Drawings]

The above and additional aspects and advantages of the present application will become more apparent and readily understood, from the following description with reference to the accompanying drawings hereinafter, in which:
Fig. 1 illustrates an example wireless network according to various embodiments of the present disclosure;
Figs. 2a and 2b illustrate example wireless transmission path and reception path according to embodiments of the present disclosure;
Fig. 3a illustrates an example user equipment according to an embodiment of the present disclosure;
Fig. 3b illustrates an example base station according to an embodiment of the present disclosure;
Figs. 4 and 5 illustrate examples of resource configuration in time-frequency domain;
Fig. 6 illustrates a flowchart of a method for a network device according to the present disclosure;
Figs. 7-14 illustrate examples of resource configuration in time-frequency domain;
Fig. 15 illustrates a flowchart of a method for a terminal device according to the present disclosure;

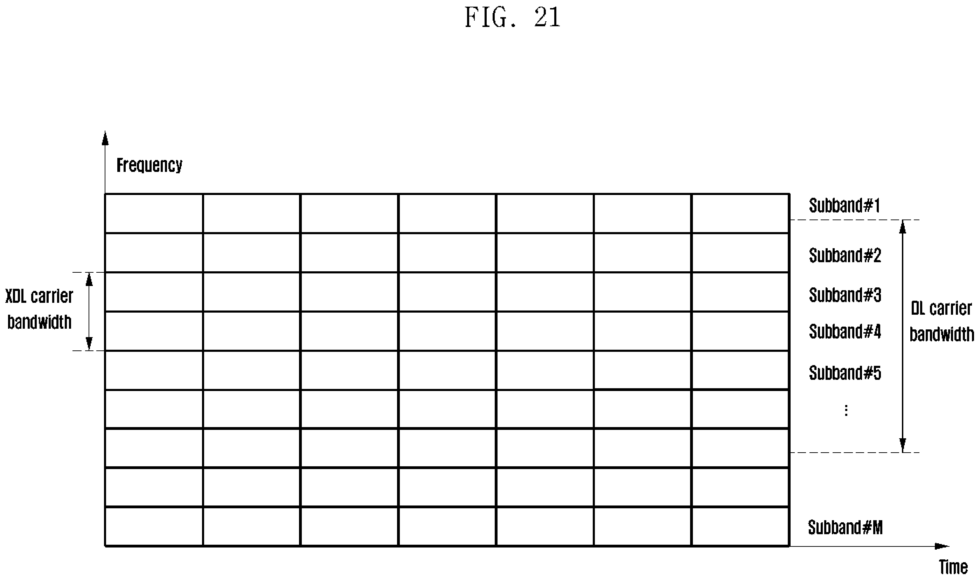

Figs. 16-23 illustrate examples of resource configuration in time-frequency domain.

### [Mode for the Invention]

The following description with reference to the accompanying drawings is provided to assist in a comprehensive understanding of various embodiments of the present disclosure as defined by the claims and their equivalents. The description includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include" or "may include" refers to the existence of a corresponding disclosed function, operation or component which can be used in various embodiments of the present disclosure and does not limit one or more additional functions, operations, or components. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

The term "or" used in various embodiments of the present disclosure includes any or all of combinations of listed words. For example, the expression "A or B" may include A, may include B, or may include both A and B.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present disclosure.

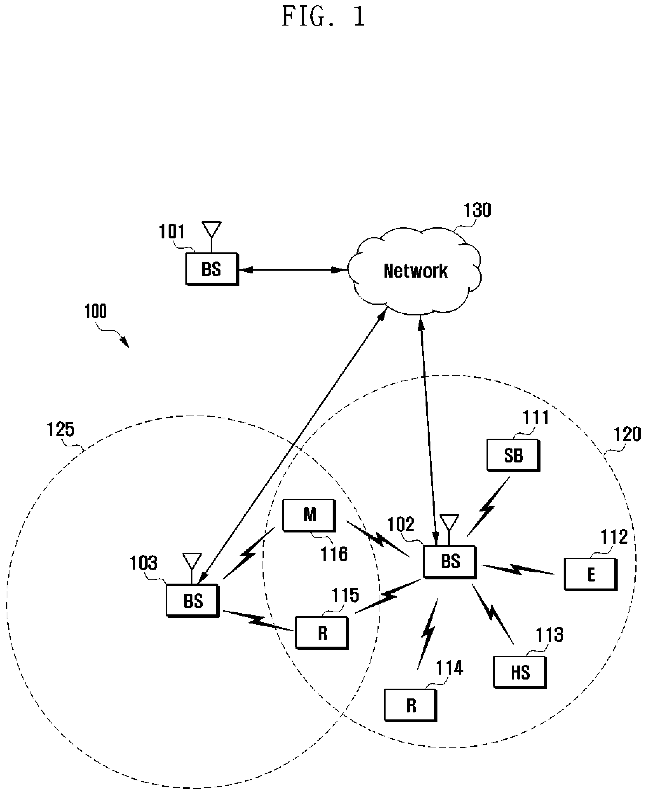

FIG. 1 illustrates an example wireless network 100 according to various embodiments of the present disclosure. The embodiment of the wireless network 100 shown in FIG. 1 is for illustration only. Other embodiments of the wireless network 100 can be used without departing from the scope of the present disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For convenience, the terms "user equipment" and "UE" are used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a 2D antenna array as described in embodiments of the present disclosure. In some embodiments, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

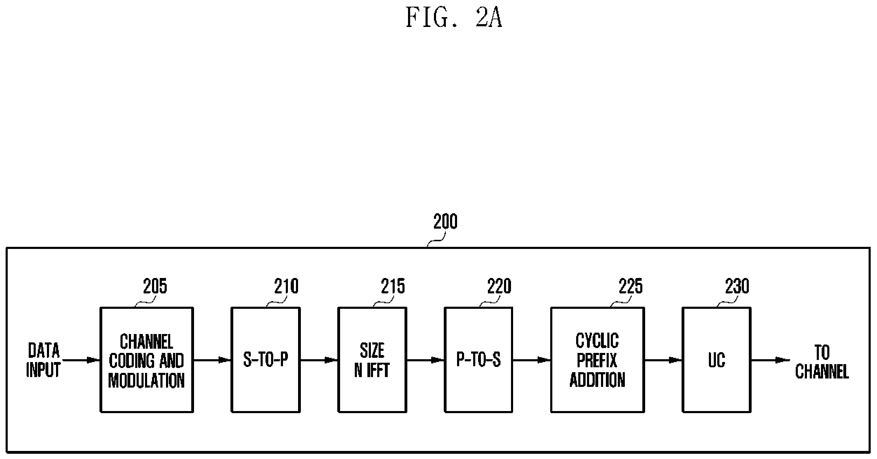

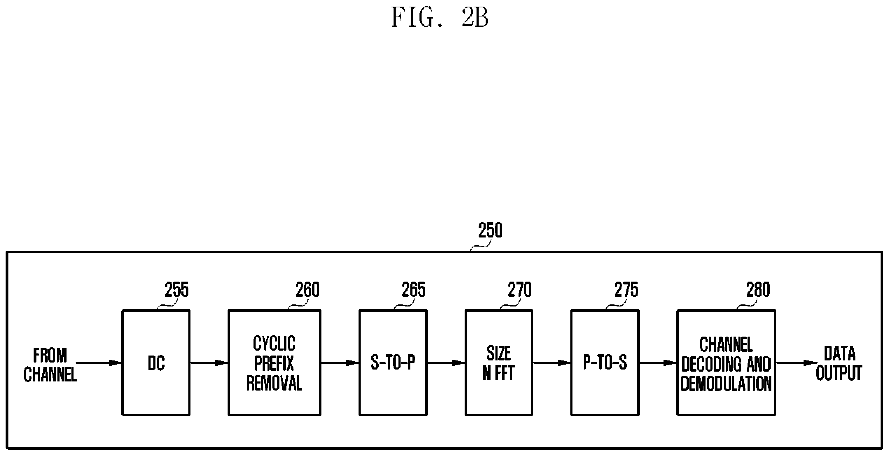

FIGs. 2a and 2b illustrate example wireless transmission and reception paths according to the present disclosure. In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the present disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at UE 116 after passing through the wireless channel, and operations in reverse to those at gNB 102 are performed at UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2a and 2b can be implemented using only hardware, or using a combination of hardware and software/firmware. As a specific example, at least some of the components in FIGs. 2a and 2b may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the present disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2a and 2b illustrate examples of wireless transmission and reception paths, various changes may be made to FIGs. 2a and 2b. For example, various components in FIGs. 2a and 2b can be combined, further subdivided or omitted, and additional components can be added according to specific requirements. Furthermore, FIGs. 2a and 2b are intended to illustrate examples of types of transmission and reception paths that can be used in a wireless network. Any other suitable architecture can be used to support wireless communication in a wireless network.

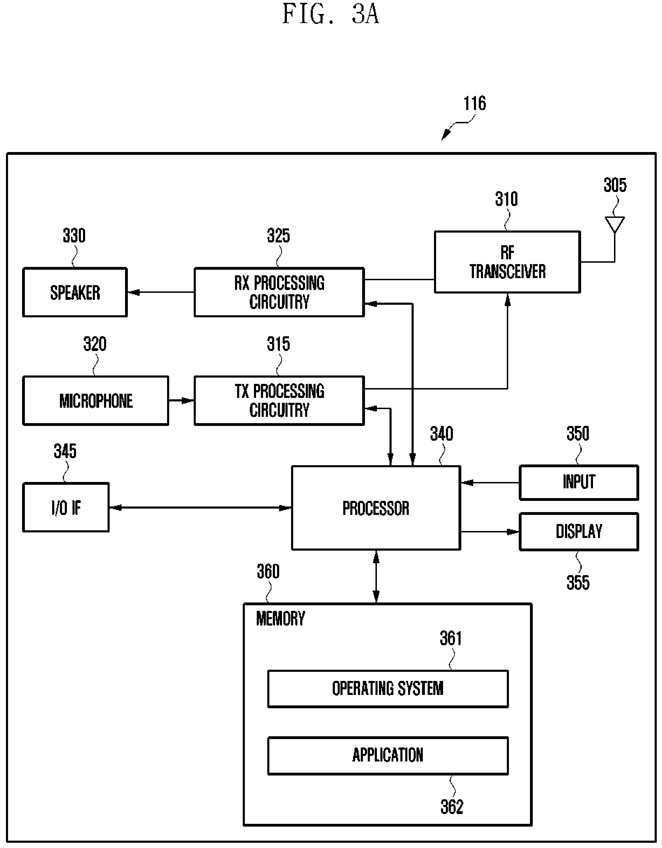

FIG. 3a illustrates an example UE 116 according to the present disclosure. The embodiment of UE 116 shown in FIG. 3a is for illustration only, and UEs 111-115 of FIG. 1 can have the same or similar configuration. However, a UE has various configurations, and FIG. 3a does not limit the scope of the present disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the present disclosure. The processor/controller 340 can move data into or out of the memory 360 as required by an execution process. In some embodiments, the processor/controller 340 is configured to execute the application 362 based on the OS 361 or in response to signals received from the gNB or the operator. The processor/controller 340 is also coupled to an I/O interface 345, where the I/O interface 345 provides UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3a illustrates an example of UE 116, various changes can be made to FIG. 3a. For example, various components in FIG. 3a can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3a illustrates that the UE 116 is configured as a mobile phone or a smart phone, UEs can be configured to operate as other types of mobile or fixed devices.

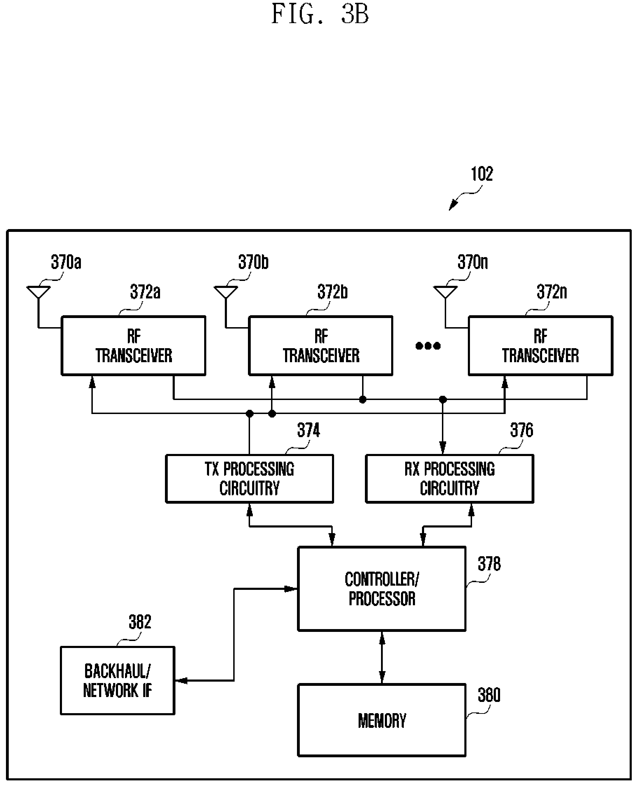

FIG. 3b illustrates an example gNB 102 according to the present disclosure. The embodiment of gNB 102 shown in FIG. 3b is for illustration only, and other gNBs of FIG. 1 can have the same or similar configuration. However, a gNB has various configurations, and FIG. 3b does not limit the scope of the present disclosure to any specific implementation of a gNB. It should be noted that gNB 101 and gNB 103 can include the same or similar structures as gNB 102.

As shown in FIG. 3b, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. gNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n downconvert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and up-convert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some embodiments, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the present disclosure. In some embodiments, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although FIG. 3b illustrates an example of gNB 102, various changes may be made to FIG. 3b. For example, gNB 102 can include any number of each component shown in FIG. 3a. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

The exemplary embodiments of the present disclosure are further described below with reference to the accompanying drawings.

The text and drawings are provided as examples only to help readers understand the present disclosure. They are not intended and should not be construed as limiting the scope of the present disclosure in any way. Although certain embodiments and examples have been provided, based on the content disclosed herein, it is apparent to those skilled in the art that changes can be made to the illustrated embodiments and examples without departing from the scope of the present disclosure.

In order to enhance the coverage of 5G wireless communication system (especially the uplink coverage) and reduce the system latency, one method is to adopt the cross-division duplex (XDD) method in the time division duplex (TDD) frequency band, or in the unpaired spectrum. Or, more specifically, the method of subband non-overlapping full duplex is adopted. Subband non-overlapping duplex means that the bandwidth of the base station (for example, the carrier bandwidth) can be divided into multiple subbands. Among them, the uplink to downlink ratio among the subbands may be different. This has the effect that the base station can allocate all of parts of the bandwidth to uplink, or allocate a larger number of parts of the bandwidth to uplink. Therefore, the uplink transmission occasions for the UE in the time domain is increased, thereby enhancing the uplink coverage capability of the UE and reducing the time latency.

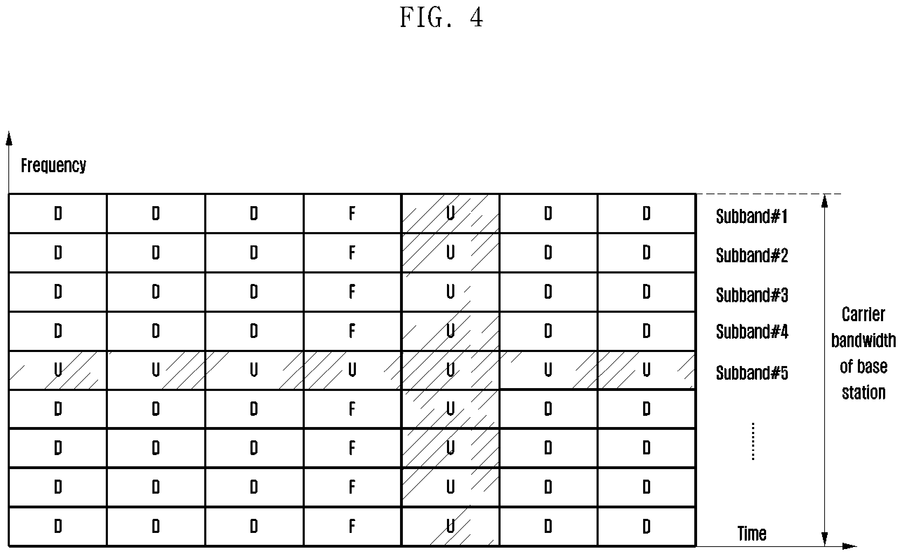

For example, as shown in Fig. 4, the horizontal axis represents time and the vertical axis represents frequency. In TDD frequency band, the carrier bandwidth (or system bandwidth) of the base station is divided into 9 subbands. Among them, subband #5 corresponds to all uplink (U), and other subbands correspond to another uplink to downlink ratio. If the UE can use subband #5 for uplink transmission, it has more uplink occasions, better coverage and lower time latency.

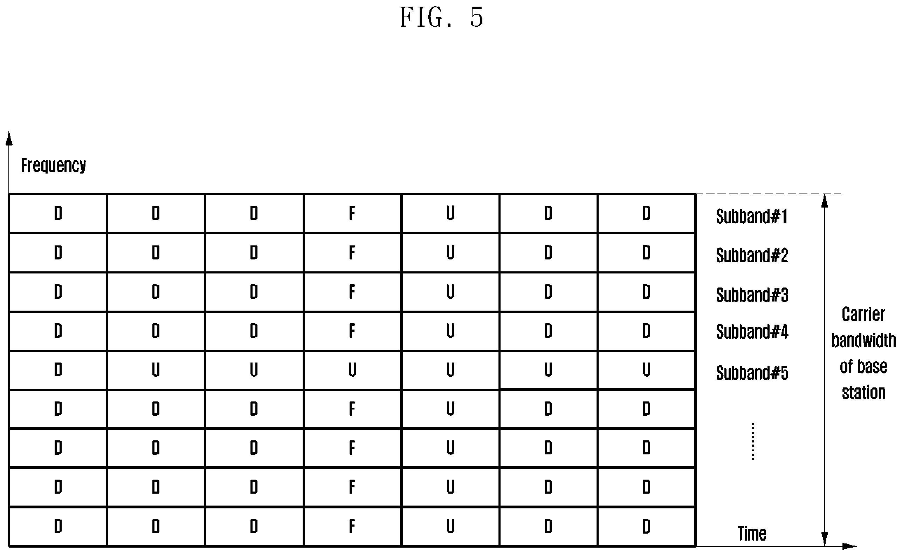

For another example, as shown in Fig. 5. In TDD frequency band, the carrier bandwidth (or system bandwidth) of the base station is divided into 9 subbands. Among them, subband #5 corresponds to a higher uplink ratio, and other subbands correspond to another uplink to downlink ratio. If the UE can use subband #5 for uplink transmission, it has more uplink occasions, better coverage and lower time latency.

However, how to effectively carry out wireless communication in XDD system is a problem to be solved. In order to solve this problem, this patent proposes a series of methods to enable network devices and terminal devices to carry out wireless communication in XDD environment, so as to improve the coverage of wireless communication system and reduce the time latency.

### Embodiment 1

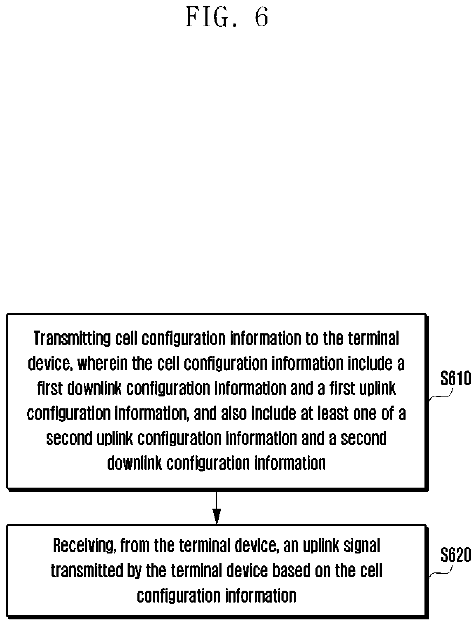

According to an exemplary embodiment of the present disclosure, the present disclosure proposes a network device (such as but not limited to a base station) and a method for the network device. Fig. 6 exemplarily illustrates a method for a network device, which includes:
According to an exemplary embodiment of the present disclosure, the present disclosure proposes a network device (such as but not limited to a base station) and a method for the network device. Fig. 6 exemplarily illustrates a method for a network device, which includes:
S610, transmitting cell configuration information to the terminal device, wherein the cell configuration information may include a first downlink configuration information and a first uplink configuration information, and may also include at least one of a second uplink configuration information and a second downlink configuration information; wherein the first downlink configuration information is for configuring the first downlink, the first uplink configuration information is for configuring the first uplink, the second uplink configuration information is for configuring the second uplink, and the second downlink configuration information is for configuring the second downlink. The first uplink and the first downlink correspond to a same reference point in frequency domain; the second uplink satisfies at least one of the following conditions: the second uplink and the first downlink are related in frequency domain; the second uplink and the first uplink are related in frequency domain.
S620: receiving, from the terminal device, an uplink signal transmitted by the terminal device based on the cell configuration information.

The first downlink is specifically referred as DL(Downlink), or normal DL (normal DL), or downlink carrier, or downlink virtual carrier, and DL is taken as an example; the first uplink is specifically referred as UL(uplink), or normal UL (normal UL), or uplink carrier, or uplink virtual carrier, and UL is taken as an example; the second uplink is related to cross division duplex or non-overlapping subband full duplex, specifically referred as (XDD-UL, XUL), or referred as non-overlapping subband full duplex uplink, or cross division duplex uplink carrier, or cross division duplex uplink virtual carrier, and XUL is taken as an example.

The network transmits cell configuration information (e.g., serving cell configuration common system information block (ServingCellConfigCommonSIB)) to the terminal device /UE, which is used to configure such as but not limited to cell specific parameters. The cell configuration information may include at least one of the following information:
- first downlink configuration information (for example, downlink configuration common (downlinkConfigCommon)); this information is used to configure common downlink parameters, which are for DL; or, this information is used to configure DL;
- first uplink configuration information (for example, uplink configuration common (uplinkConfigCommon)); this information is used to configure common uplink parameters, which are for UL; or, this information is used to configure UL;
- second uplink configuration information (for example, cross division duplex uplink (CrossDivisionDuplexUplink)); this information is used to configure common uplink parameters, which are for XUL; or, this information is used to configure XUL. Generally speaking, XUL can be a complement to UL. One embodiment is that both UL and XUL are for DL;
- second downlink configuration information, which is used to configure the second downlink.

Although the cell configuration information is described above with cell level parameters as an example, the present disclosure is not limited to this. For example, the cell configuration information can also be used to configure UE-specific parameters.

Below, an exemplary embodiment of the present disclosure will be described with the following case as example: in which the cell configuration information includes the first downlink configuration information, the first uplink configuration information, and the second uplink configuration information.

Here, DL and UL are related in frequency domain. One way of understanding that DL and UL are related in frequency domain is that DL and UL correspond to a same reference point in frequency domain. Specifically, both DL and UL use the same point A (Point A) or the same common resource block #0 (Common RB 0, CRB#0) as a reference to calculate the position and size of the corresponding frequency domain resources. Point A serves as a common reference point for resource block grids. Wherein, the acquisition of Point A or CRB#0 can be based on the frequency domain position (e.g., offset to Point A ((offsetToPointA)) of a Synchronization Signal Block, SSB), for example, fPoint_A = fSSB + offsetToPointA, wherein fPoint_A is the frequency domain position corresponding to Point A, fSSB is the frequency domain position corresponding to SSB; the acquisition can also be based on the absolute frequency domain position (for example, absolute frequency point a (absoluteFrequencyPointA)). According to another embodiment, DL and UL correspond to the same bidirectional carrier.

One way of understanding that DL and UL are related in frequency domain is that the frequency bands of DL and UL are related. Specifically, the information of the frequency band corresponding to DL and UL are the same.

In addition, XUL satisfies one of the following conditions: 1) XUL and DL are related in frequency domain; 2) XUL and UL are related in frequency domain.

According to an embodiment, the second uplink and the first downlink being related in frequency domain comprises at least one of the following:
the second uplink and the first downlink correspond to a same reference point in frequency domain.
the frequency band of the second uplink is related to the frequency band of the first downlink.
the second uplink is related to the carrier bandwidth of the first downlink.

An embodiment in which XUL and DL are related in frequency domain is that XUL and DL correspond to a same reference point in frequency domain. Specifically, both XUL and DL use the same Point A or the same CRB#0 (Common RB 0) as a reference to calculate the position and size of the corresponding frequency domain resources. Wherein, the acquisition of Point A or CRB#0 can be based on the frequency domain position of SSB (for example, offsetToPointA) or can be based on the absolute frequency domain position (for example, absoluteFrequencyPointA). As XUL and DL share the same reference point in frequency domain, one embodiment method is that the information of reference point in frequency domain only needs to be included in the indication information corresponding to DL, e.g., uplink frequency information SIB (FrequencyInfoUL-SIB), and FrequencyInfoUL-SIB corresponding to XUL does not need to be configured or does not contain information of reference point in frequency domain. For example, as shown in Table 1 below, for XUL, the absolute frequency point A (absoluteFrequencyPointA) in the FrequencyInfoUL-SIB is absent. The advantage of this method is that it can save signaling overhead.

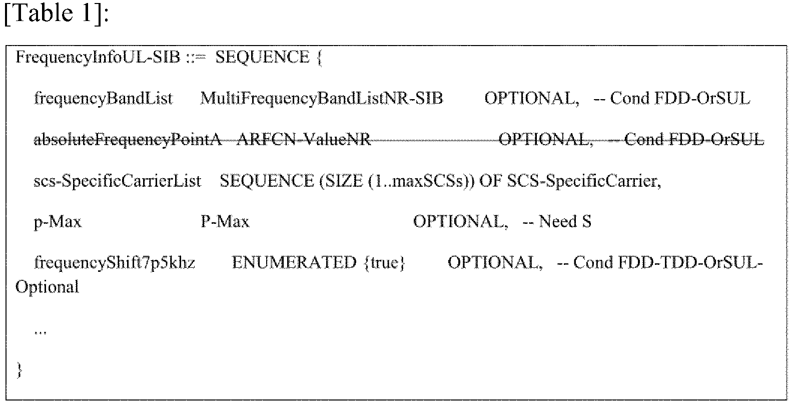

Another embodiment in which XUL and DL are related in frequency domain is that the frequency band corresponding to XUL is related to the frequency band corresponding to DL. Specifically, the information of the frequency band corresponding to XUL can be the same as the information of the frequency band corresponding to DL, or the information of the frequency band corresponding to XUL can be a subset of the information of the frequency band corresponding to DL. In the case that the information of the frequency band corresponding to XUL is the same as the information of the frequency band corresponding to DL, the configuration information corresponding to XUL does not include frequency band indication information; or, in the case that the information of the frequency band corresponding to XUL is a subset of the information of the frequency band corresponding to DL, the configuration information corresponding to XUL includes frequency band indication information. For example, the information of the frequency band corresponding to DL is indicated in the frequency band list (frequencyBandList) in the downlink frequency information SIB (FrequencyInfoDL-SIB) of the downlink configuration common (downlinkConfigCommon). Because XUL generally does not constitute a cell without DL alone, the frequency band corresponding to XUL can be the same as the DL frequency band, or be a subset of the DL frequency band. For the case that the frequency band corresponding to XUL is the same as the frequency band corresponding to DL, the information of the frequency band corresponding to XUL does not need to be indicated separately, that is, XUL shares the information of DL frequency band. The frequencyBandList in the uplink frequency information SIB(FrequencyInfoUL-SIB) of XUL does not exist, for example, as shown in the Table 2 below. This method can save signaling overhead.

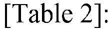

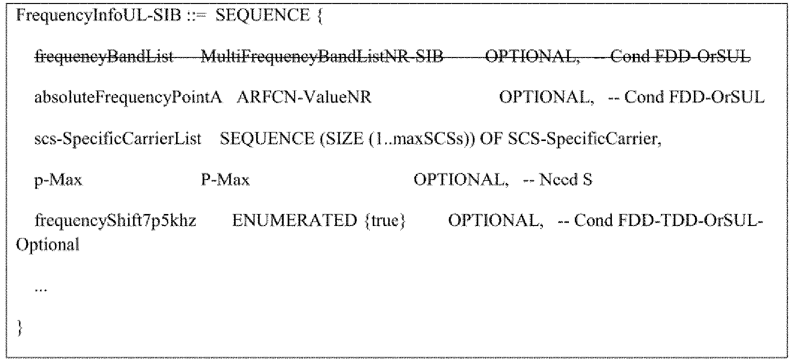

For the case that the frequency band corresponding to XUL is a subset of DL frequency band, the information of the frequency band corresponding to XUL also needs to be indicated separately, that is, the frequencyBandList element (IE) in the FrequencyInfoUL-SIB of XUL exists, for example, as shown in Table 3 below. And the frequency band not indicated in frequencyBandList of DL cannot be existed in the frequency bands indicated in the list. For example, DL corresponds to frequency band #1 and frequency band #2; the frequency band corresponding to XUL cannot be the frequency band other than frequency band #1 and frequency band #2.

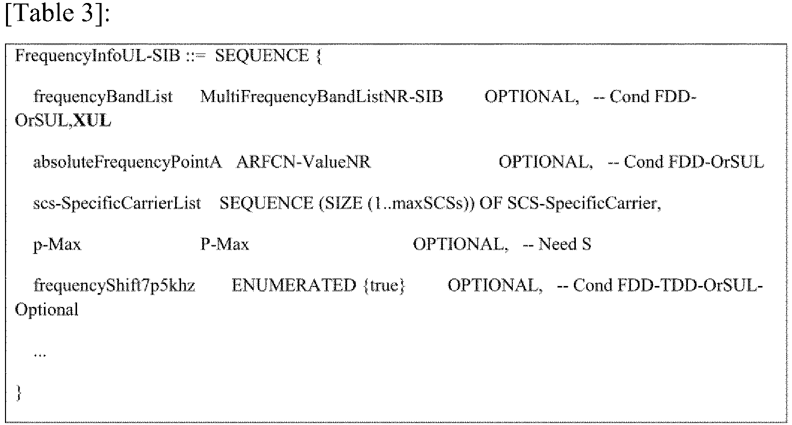

Another embodiment in which XUL and DL are related in frequency domain is that XUL is related to the carrier bandwidth of DL. Specifically, the carrier bandwidth of XUL is included in the carrier bandwidth corresponding to DL.

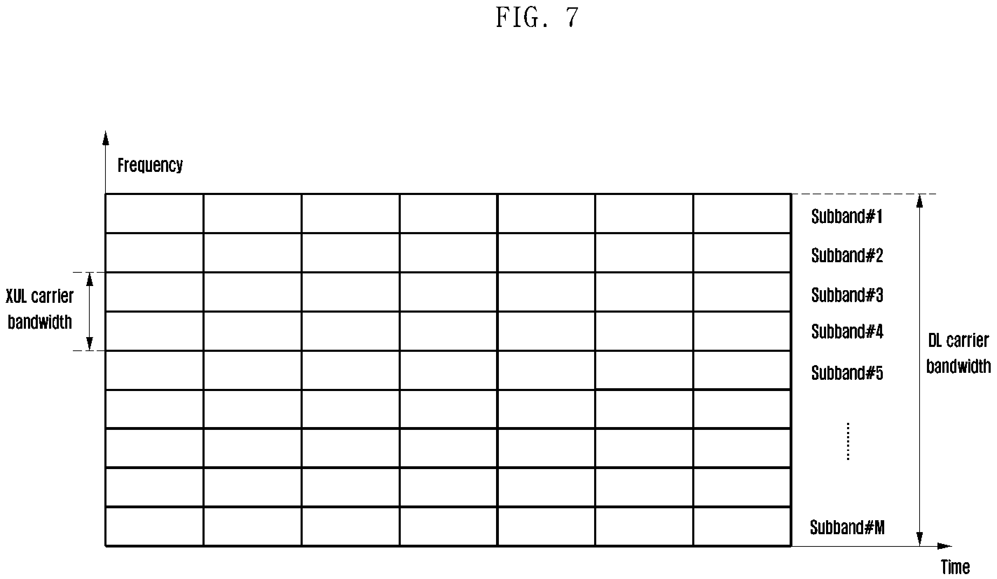

For example, the carrier bandwidth corresponding to DL is indicated by the subcarrier spacing-specific carrier (SCS-SpecificCarrier). The carrier bandwidth corresponding to XUL is one or more consecutive subbands of the carrier bandwidth corresponding to DL. As shown in Fig. 7, the carrier bandwidth corresponding to DL is divided into M subbands. The carrier bandwidth corresponding to DL (for example, when SCS = 15kHz) is indicated by SCS-SpecificCarrier. XUL carrier bandwidth consists of one or more consecutive subbands among the M subbands. Here, XUL carrier bandwidth is subband 3 and subband 4. It can be indicated by the subband indication information included in the XUL configuration information, such as the starting subband (subband #3) and the number of consecutive subbands (2).

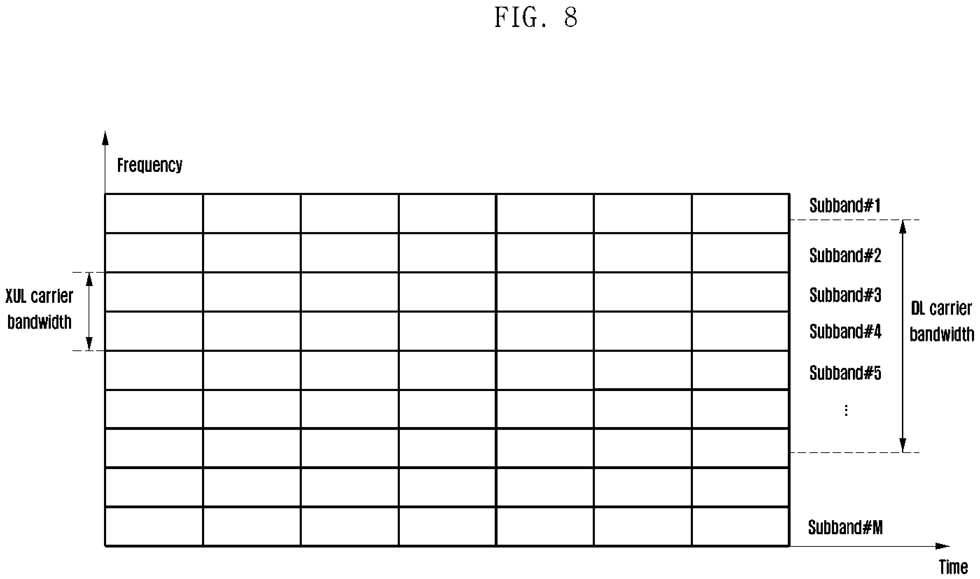

For another example, the carrier bandwidth corresponding to DL is indicated by SCS-SpecificCarrier. The carrier bandwidth corresponding to XUL is one or more consecutive subbands overlapping (partially overlapping or completely overlapping) with the carrier bandwidth corresponding to DL. As shown in Fig. 8, take the case of completely overlapping as an example. Frequency domain is divided into M subbands according to the predefined rules. The carrier bandwidth corresponding to DL (for example, when SCS = 15kHz) is indicated by SCS-SpecificCarrier. Among them, subband #2 to subband #6 completely overlap with the DL carrier bandwidth, and the XUL carrier bandwidth consists of one or more consecutive subbands among these subbands. Here, XUL carrier bandwidth is subband 3 and subband 4. It can be indicated by the subband indication information included in the XUL configuration information, such as the starting subband (subband #3) and the number of consecutive subbands (2).

According to an embodiment, the second uplink and the first uplink being related in frequency domain comprises at least one of the following:
the second uplink and the first uplink correspond to a same reference point in frequency domain;
the frequency band of the second uplink is related to the frequency band of the first uplink;
the second uplink is related to the carrier bandwidth of the first uplink.

An embodiment in which XUL and UL are related in frequency domain is that XUL and UL correspond to a same reference point in frequency domain. Specifically, both XUL and UL use the same Point A or the same CRB#0 (Common RB 0) as a reference to calculate the position and size of the corresponding frequency domain resources. Wherein, the acquisition of Point A or CRB#0 can be based on the frequency domain position of SSB (for example, offsetToPointA) or can be based on the absolute frequency domain position (for example, absoluteFrequencyPointA). Similar to the case that XUL and DL correspond to a same reference point in frequency domain described above, the advantage of this method is that it can save signaling overhead.

In addition, another embodiment in which XUL and UL are related in frequency domain is that the frequency band corresponding to XUL is related to the frequency band corresponding to UL. Specifically, the information of the frequency band corresponding to XUL can be the same as the information of the frequency band corresponding to UL, or the information of the frequency band corresponding to XUL can be a subset of the information of the frequency band corresponding to UL. In the case that the information of the frequency band corresponding to XUL is the same as the information of the frequency band corresponding to UL, the configuration information corresponding to XUL does not include band indication information; or in the case that the information of the frequency band corresponding to XUL can be a subset of the band information corresponding to UL, the configuration information corresponding to XUL includes frequency band indication information. For example, the information of the frequency band corresponding to UL is indicated in the frequencyBandList in FrequencyInfoUL-SIB of uplinkConfigCommonSIB. Because XUL generally does not constitute a cell without UL alone, the frequency band corresponding to XUL can be the same as the UL frequency band, or be a subset of the UL frequency band. For the case that the frequency band corresponding to XUL is the same as the frequency band corresponding to UL, the information of the frequency band corresponding to XUL does not need to be indicated separately, that is, XUL shares the information of UL frequency band. Similar to the case that the frequency band corresponding to XUL is related to the frequency band corresponding to DL described above, this method has the advantage of saving signaling overhead.

For the case that the frequency band corresponding to XUL is a subset of UL frequency band, the information of the frequency band corresponding to XUL also needs to be indicated separately, that is, the frequencyBandList IE in the FrequencyInfoUL-SIB of XUL exists, for example, as shown in Table 3 below. And the frequency band not indicated in frequencyBandList of UL cannot be existed in the frequency bands indicated in the list. For example, UL corresponds to frequency band #1 and frequency band #2; the frequency band corresponding to XUL cannot be the frequency band other than frequency band #1 and frequency band #2.

In addition, another embodiment in which XUL and UL are related in frequency domain is that XUL is related to the carrier bandwidth of UL. Specifically, the carrier bandwidth of XUL is included in the carrier bandwidth corresponding to UL.

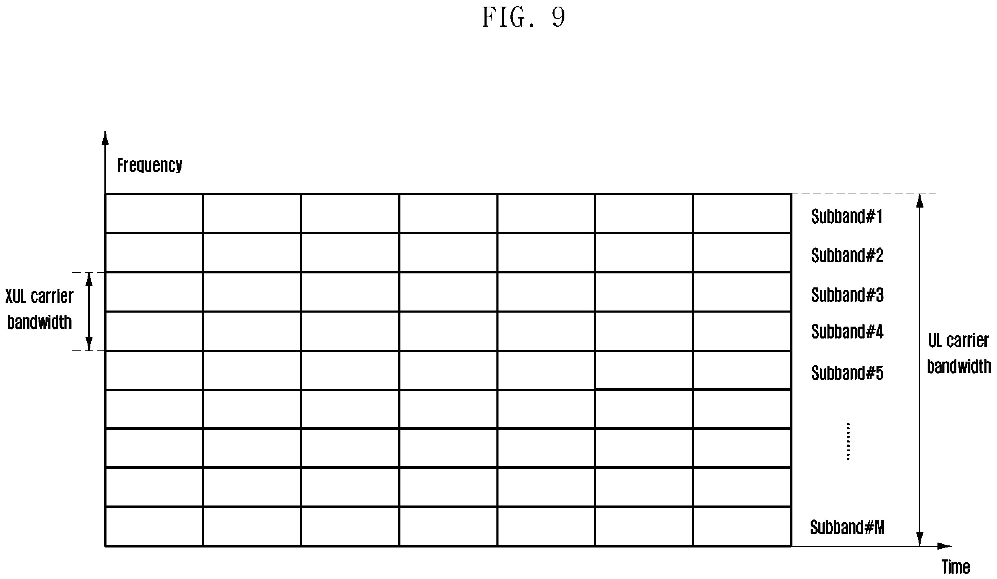

For example, the carrier bandwidth corresponding to UL is indicated by SCS-SpecificCarrier. The carrier bandwidth corresponding to XUL is one or more consecutive subbands of the carrier bandwidth corresponding to UL. As shown in Fig. 9, the carrier bandwidth corresponding to UL is divided into M subbands. The carrier bandwidth corresponding to UL (for example, when SCS = 15kHz) is indicated by SCS-SpecificCarrier. XUL carrier bandwidth consists of one or more consecutive subbands among the M subbands. Here, XUL carrier bandwidth is subband 3 and subband 4. It can be indicated by the subband indication information included in the XUL configuration information, such as the starting subband (subband #3) and the number of consecutive subbands (2).

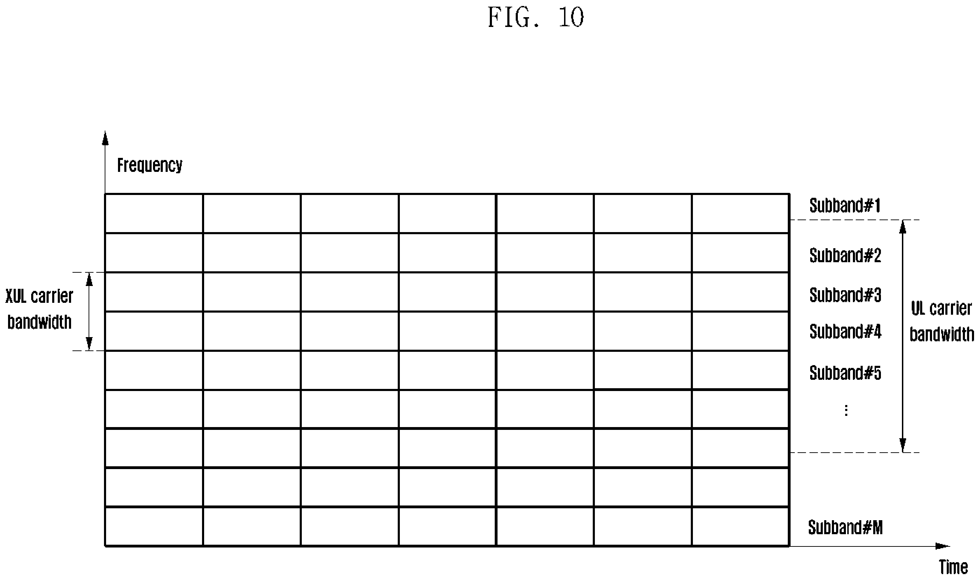

For another example, the carrier bandwidth corresponding to UL is indicated by SCS-SpecificCarrier. The carrier bandwidth corresponding to XUL is one or more consecutive subbands overlapping (partially overlapping or completely overlapping) with the carrier bandwidth corresponding to UL. As shown in Fig. 10, take the case of completely overlappping as an example. Frequency domain is divided into M subbands according to the predefined rules. The carrier bandwidth corresponding to UL (for example, when SCS = 15kHz) is indicated by SCS-SpecificCarrier. Among them, subband #2 to subband #6 completely overlap with the UL carrier bandwidth, and the XUL carrier bandwidth consists of one or more consecutive subbands among these subbands. Here, XUL carrier bandwidth is subband 3 and subband 4. It can be indicated by the subband indication information included in the XUL configuration information, such as the starting subband (subband #3) and the number of consecutive subbands (2).

According to an embodiment of the present disclosure, the first uplink is related to one or more Bandwith Part (BWP); and the second uplink is related to one or more BWPs.

An embodiment in which the first uplink is related to one or more BWPs is that the UL can be configured with one or more BWPs, or the configuration information corresponding to the UL includes the configuration information of one or more BWPs. The specific way of configuration can be predefined or explicitly indicated. For example, UL BWP#0 is configured in a predefined way, and UL BWP#1 to UL BWP#4 are configured in an explicit way (such as but not limited to radio resource control (RRC) signaling, the network provides the ID of BWP and parameters corresponding to this BWP ID through UE-specific RRC signaling).

An embodiment in which the second uplink is related to one or more BWPs is that XUL can be configured with one or more BWPs, or the configuration information corresponding to XUL includes the configuration information of one or more BWPs. The specific way of configuration can be predefined or explicitly indicated. For example, XUL BWP#0 is configured in a predefined way, and XUL BWP#1 to XUL BWP#4 are configured in an explicit indication method.

The above embodiments of the present application provide an uplink and downlink configuration method in XDD scenarios. For XDD, the corresponding uplink to downlink ratios in different frequency domain resources are different. The method proposed in this application is to add XUL configuration in addition to UL configuration in the configuration information of the cell. XDD can be supported more flexibly by independent configuration of XUL and UL. That is, XUL corresponds to frequency domain resources with high uplink ratio. This configuration method makes it more flexible to configure uplink and downlink resources in XDD system, saves signaling overhead and improves system performance.

According to an embodiment of the present disclosure, through indication signaling, the network device avoids simultaneous transmission of a physical uplink shared channel (PUSCH) on the first uplink and the second uplink.

An embodiment in which the network device avoids simultaneous transmission of PUSCH on the first uplink and the second uplink through indication signaling is that the network device avoids transmitting overlapping PUSCH in UL and XUL through scheduling. Here, one of overlapping is time domain overlapping. For example, the network device schedules PUSCH#1 on UL by transmitting downlink control information (DCI)#1, and schedules PUSCH#2 on XUL by transmitting DCI#2. The network device avoids overlapping of PUSCH#1 and PUSCH#2 in time domain.

Another embodiment in which the network device avoids simultaneous transmission of PUSCH on the first uplink and the second uplink through indication signaling is that the network device does not configure PUSCHs for UL and XUL simultaneously. That is, the network device configures PUSCH for one of UL and XUL. With this way of configuration, it can be ensured that PUSCH will not be transmitted on UL and XUL simultaneously.

Another embodiment in which the network device avoids simultaneous transmission of PUSCH on the first uplink and the second uplink through indication signaling is that the network device does not configure the type 1 configured grant configuration for UL and XUL simultaneously. Or, the network device configures the type 1 configured grant configuration for UL or XUL. Or, the network device configures the type 1 configuration grant configuration for one of UL and XUL. With this way of configuration, it can be ensured that PUSCH based on type 1 configured grant configuration will not be transmitted on UL and XUL simultaneously.

Another embodiment in which the network device avoids simultaneous transmission of PUSCH on the first uplink and the second uplink through indication signaling is that the network device makes the time domain resources of an active configured UL grant and an active configured XUL grant not overlap by configuring and/or activating signaling. In this way, it can be ensured that PUSCH based on the type 2 configuration grant configuration will not be transmitted on UL and XUL simultaneously.

As NR UE does not have the capability of transmitting two PUSCHs in one cell simultaneously, it can avoid the situation that UE transmits two PUSCHs in one cell simultaneously through the above configuration/indication method, thereby improving the stability of the system.

According to an embodiment of the present disclosure, through indication signaling (configuration signaling or scheduling), the network device avoids simultaneous transmission of a physical uplink control channel (PUCCH) on the first uplink and the second uplink.

If the PUCCH transmissions on two ULs overlap, the UE multiplexes or drops one of the PUCCH transmissions.

An embodiment in which the network device avoids simultaneous transmission of PUCCH on the first uplink and the second uplink through indication signaling is that the network device avoids transmitting overlapping PUCCH in UL and XUL through scheduling. Here, one of overlapping is time domain overlapping. For example, the network device configures PUCCH on XUL and UL simultaneously. The network device triggers PUCCH#1 on UL by transmitting DCI#1 and PUCCH#2 on XUL by transmitting DCI#2. The network device avoids overlapping of PUCCH#1 and PUCCH#2 in time domain through scheduling.

An embodiment in which the network device avoids simultaneous transmission of PUCCH on the first uplink and the second uplink through indication signaling is that the network device does not configure PUCCHs for UL and XUL simultaneously, that is, the network device configures PUCCH for one of UL and XUL. Here, configuring PUCCH can be configuring a common PUCCH (common PUCCH) or a dedicated PUCCH. In this way, the simultaneous transmission of PUCCH on UL and XUL can be avoided.

As NR UE does not have the capability of transmitting two PUCCHs in one cell simultaneously, it can avoid the situation that UE transmits two PUCCHs in one cell simultaneously through the above configuration/indication method, thereby improving the stability of the system.

According to an embodiment of the present disclosure, the network device configures random access channel (RACH) parameters On the first uplink and/or the second uplink.

An embodiment in which the network device configures the RACH resource on the first uplink and/or the second uplink is that the network device configures the RACH parameter on UL or configures the RACH parameter on XUL. For example, the network device configures the RACH parameter (RACH-ConfigCommon) on UL, but does not configure the RACH parameter on XUL; Or, the network device configures the RACH parameter (RACH-ConfigCommon) on XUL, but does not configure the RACH parameter on UL. That is, the configuration information corresponding to the UL includes the RACH parameter, while the configuration information corresponding to the XUL does not include the RACH parameter; Or, the configuration information corresponding to the XUL includes the RACH parameter, while the configuration information corresponding to the UL does not include the RACH parameter.

An embodiment in which the network device configures the RACH resource on the first uplink and/or the second uplink is that the network device configures the RACH parameters on UL and also configures the RACH parameters on XUL. For example, the network device configures the RACH parameter (RACH-ConfigCommon) on UL and also configures the RACH parameter (rach-ConfigCommon) on XUL. That is, the configuration information corresponding to the UL includes the RACH parameter, and the configuration information corresponding to the XUL also includes the RACH parameter. In this case, the terminal device can perform random access according to one or more of the following methods.

### Method 1:

The terminal device performs random access procedure on XUL based on predefined rules. This has the advantage that when the terminal device supports XDD (XUL), XUL is prioritized for the selection of random access, so that the random access resources of UL in the cell are reserved for the terminal device that does not support XDD(XUL) for random access. The efficiency of resource utilization is improved.

### Method 2:

The terminal device performs random access procedure on UL based on predefined rules. This has the advantage of avoiding the conflict among multiple terminal devices caused by the terminal devices independently selecting the random access resources on XUL. In this case, the terminal device usually only performs random access procedure on UL, unless in the case that explicit signaling from network device is received, the terminal device uses the random access resources of XUL to perform random access (refer to Method 4).

### Method 3:

The RACH parameter of XUL may include a threshold, for example, the reference signal received power threshold SSB-XUL(rsrp-ThresholdSSB-XUL). The terminal device selects XUL or UL for random access procedure based on the threshold; or, the terminal device selects XUL for random access procedure based on the threshold. Specifically, when the downlink path loss reference (for example, reference signal received power (RSRP) of SSB) is lower than the threshold, the terminal device selects XUL for random access procedure; When the downlink path loss reference is equal to or higher than the threshold, the terminal device selects UL for random access procedure. This has the advantage that when the RSRP of the downlink path loss reference is lower than the threshold, it means that the channel quality decreases, or the coverage of the channel decreases. At this time, the random access procedure can be better completed on this channel by selecting XUL. The reason is that XUL has many uplink consecutive occasion and can carry a longer physical random access channel format (PRACH format). The longer PRACH format means better coverage, so the performance of the system can be better improved in this situation.

### Method 4:

The network device may also indicate whether the terminal device performs random access on UL or XUL by transmitting indication information (for example, explicit indication information) to the terminal device. The terminal device determines whether to perform random access procedure on UL or XUL based on the indication of the network device. The explicit indication information is DCI, MAC-CE (Medium Access Control-Control Element) or RRC. The advantage of this method is that the network device can indicate the terminal device whether to perform the initial access on UL or XUL according to the uplink channel state or the uplink traffic condition, so as to improve the success rate of the initial access of the terminal device, or optimize the efficiency of resource utilization.

According to an embodiment of the present disclosure, the network device configures the maximum output power of the terminal on the first uplink to be the same as the maximum output power of the terminal on the second uplink.

An embodiment in which the network configures the maximum output power of the terminal on the first uplink to be the same as the maximum output power of the terminal on the second uplink is that: the network device configures the maximum output power Pcmax (for example, the maximum power p-max in FrequencyInfoUL-SIB or FrequencyInfoUL) of the terminal on UL, and the network device configures Pcmax (for example, the p-max in FrequencyInfoUL-SIB or FrequencyInfoUL) of the terminal on XUL. Wherein the value of Pcmax configured on XUL is the same as that of Pcmax configured on UL.

Another embodiment in which the network configures the maximum output power of the terminal on the first uplink to be the same as the maximum output power of the terminal on the second uplink is that the network device configures Pcmax (for example, p-max in FrequencyInfoUL-SIB or FrequencyInfoUL) on UL, and the network device does not configure Pcmax (for example, p-max in FrequencyInfoUL-SIB or FrequencyInfoUL) on XUL. That is, XUL shares the Pcmax of UL. This method has the advantage of saving signaling overhead.

Next, an exemplary embodiment of the present disclosure will be described by taking the example that the cell configuration information further includes the second downlink configuration information.

According to an embodiment of the present disclosure, the cell configuration information may further include second downlink configuration information, which is used to configure the second downlink; wherein the second downlink satisfies at least one of the following conditions:
the second downlink and the first downlink are related in frequency domain;
the second downlink and the second uplink are related in frequency domain.

Further explanation is made below in connection with the above examples. Wherein, the second downlink is related to cross division duplex or subband non-overlapping full duplex, specifically referred as cross-division duplex uplink (XDD-DL, XDL) or referred as subband non-overlapping full duplex downlink, and XDL is taken as an example.

The cell configuration information may further include second downlink configuration information (for example, CrossDivisionDuplexDownlink); the information is used to configure common downlink parameters, which are for XDL; or, in other words, the information is used to configure XDL.

Generally speaking, XDL and XUL are corresponding. That is, when both XUL and XDL are configured in a cell, DL and UL are corresponding, XDL and XUL are corresponding. It can be switched among DL, UL, XDL and XUL by indication signaling.

In addition, XDL satisfies one of the following conditions: 1) XDL and DL are correlated in frequency domain; 2) XDL and XUL are related in frequency domain.

According to an embodiment, the second downlink and the first downlink being related in frequency domain comprises at least one of the following:
the second downlink and the first downlink correspond to the same reference point in frequency domain;
the frequency band of the second downlink is related to the frequency band of the first downlink;
the second downlink is related to the carrier bandwidth of the first downlink.

An embodiment in which the second downlink and the first downlink are related in frequency domain is that XDL and DL correspond to a same reference point in frequency domain. Specifically, both DL and XDL use the same Point A or the same CRB#0 (Common RB 0) as a reference to calculate the position and size of the corresponding frequency domain resources. Wherein, the acquisition of Point A or CRB#0 can be based on the frequency domain position of SSB (for example, offsetToPointA) or based on the absolute frequency domain position (for example, absoluteFrequencyPointA). Specifically, XDL and DL can use the same offsetToPointA. That is, the offset from the lowest point in frequency domain of XDL's carrier bandwidth to point A is consistent with the offset from the lowest point in frequency domain of DL's carrier bandwidth to Point A. Therefore, one method is that offsetToPointA only needs to be included in the indication information (FrequencyInfoDL-SIB) corresponding to DL, and FrequencyInfoDL-SIB corresponding to XDL does not need to be configured or does not contain information of reference point in frequency domain. As shown in Table 4 below, for XDL, the offsetToPointA in FrequencyInfoDL-SIB is absent.

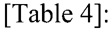

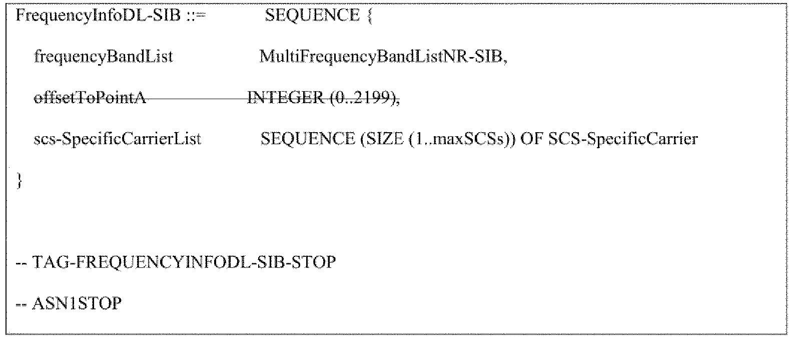

In addition, an embodiment in which XDL and DL are related in frequency domain is that the frequency band corresponding to XDL is related to the frequency band corresponding to DL. Specifically, the information of the frequency band corresponding to XDL may be the same as the information of the frequency band corresponding to DL, or the information of the frequency band corresponding to XDL may be a subset of the information of the frequency band corresponding to DL. In the case that the information of the frequency band corresponding to XDL is the same as the information of the frequency band corresponding to DL, the configuration information corresponding to XDL does not include frequency band indication information; or in the case that the information of the frequency band corresponding to XDL is a subset of the information of the frequency band corresponding to DL, the configuration information corresponding to XDL includes frequency band indication information. For example, the information of the frequency band corresponding to DL is indicated in the frequencyBandList in the FrequencyInfoDL-SIB of downlinkConfigCommon. Because XUL generally does not constitute a cell without DL alone, the frequency band corresponding to XUL can be the same as the DL frequency band, or be a subset of the DL frequency band. For the case that the frequency band corresponding to XDL is the same as the frequency band corresponding to DL, the information of the frequency band corresponding to XUL does not need to be indicated separately, that is, XDL shares the information of DL frequency band. The frequencyBandList in FrequencyInfoDL-SIB of XDL does not exist, for example, as shown in the Table 5 below. This method can save signaling overhead.

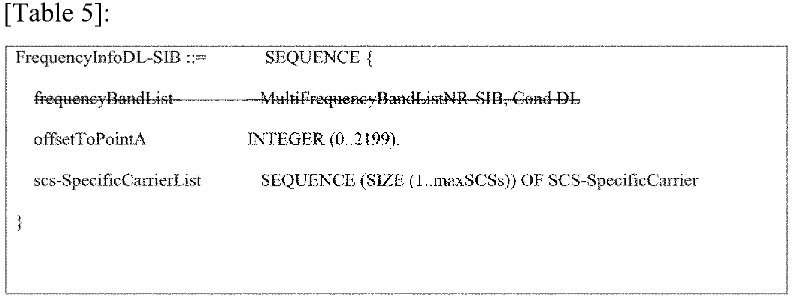

For the case that the frequency band corresponding to XDL is a subset of DL frequency band, the information of the frequency band corresponding to XDL also needs to be indicated separately, that is, the frequencyBandList IE in the FrequencyInfoDL-SIB of XDL exists, for example, as shown in Table 6 below. And the frequency band not indicated in frequencyBandList of DL cannot be existed in the frequency bands indicated in the list. For example, DL corresponds to frequency band #1 and frequency band #2; the frequency band corresponding to XDL cannot be the frequency band other than frequency band #1 and frequency band #2.

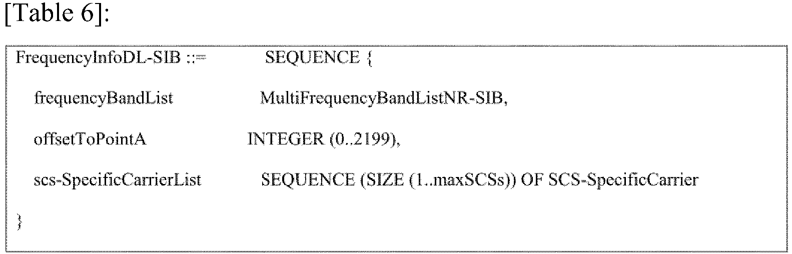

Another embodiment in which XDL and DL are related in frequency domain is that XDL is related to the carrier bandwidth of DL. Specifically, the carrier bandwidth of XDL is included in the carrier bandwidth corresponding to DL.

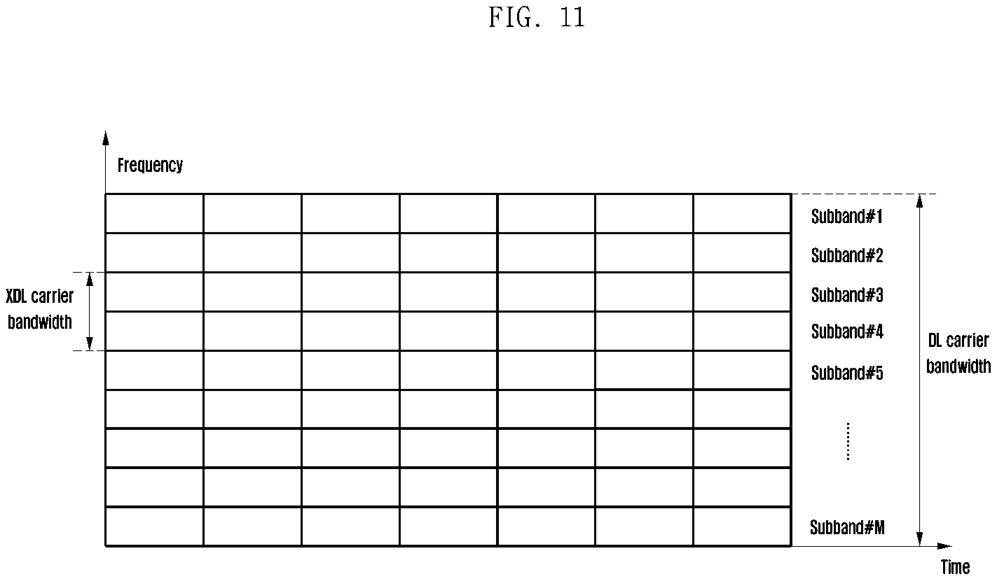

For example, the carrier bandwidth corresponding to DL is indicated by SCS-SpecificCarrier. The carrier bandwidth corresponding to XDL is one or more consecutive subbands of the carrier bandwidth corresponding to DL. As shown in fig. 11, the carrier bandwidth corresponding to DL is divided into M subbands. The carrier bandwidth corresponding to DL (for example, when SCS = 15kHz) is indicated by SCS-SpecificCarrier. XDL carrier bandwidth consists of one or more consecutive subbands among the M subbands. Here, XDL carrier bandwidth is subband 3 and subband 4. It can be indicated by the subband indication information included in the XDL configuration information, such as the starting subband (subband #3) and the number of consecutive subbands (2).

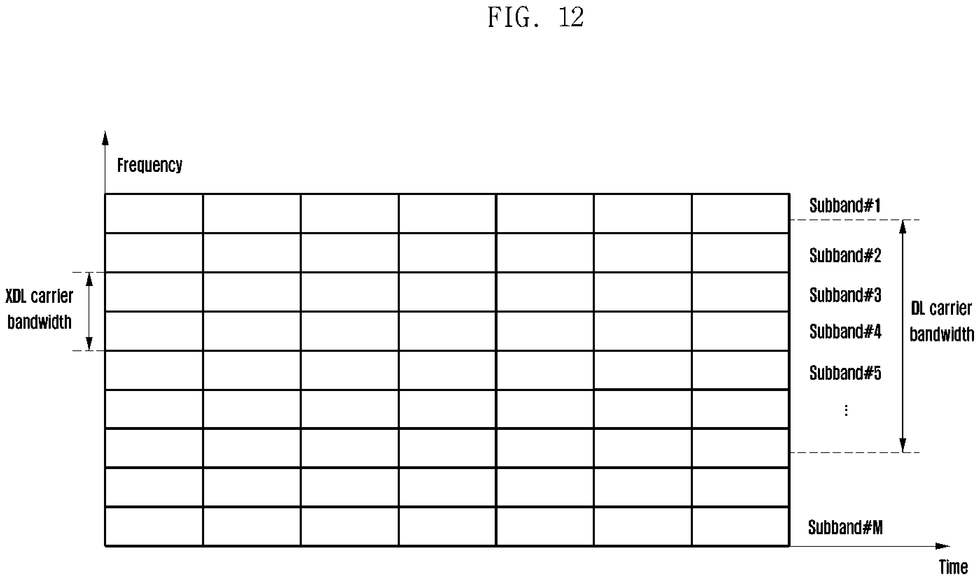

For another example, the carrier bandwidth corresponding to DL is indicated by SCS-SpecificCarrier. The carrier bandwidth corresponding to XDL is one or more consecutive subbands overlapping (partially overlapping or completely overlapping) with the carrier bandwidth corresponding to DL. As shown in Fig. 12, take the case of completely overlapping as an example. Frequency domain is divided into M subbands according to the predefined rules. The carrier bandwidth corresponding to DL (for example, when SCS = 15kHz) is indicated by SCS-SpecificCarrier. Among them, subband #2 to subband #6 completely overlap with the DL carrier bandwidth, and the XDL carrier bandwidth consists of one or more consecutive subbands among these subbands. Here, XDL carrier bandwidth is subband 3 and subband 4. It can be indicated by the subband indication information included in the XDL configuration information, such as the starting subband (subband #3) and the number of consecutive subbands (2).

According to an embodiment, the second downlink and the second uplink being related in frequency domain comprises at least one of the following:
the second downlink and the second uplink correspond to a same reference point frequency domain;
the second downlink frequency band is related to the frequency band of the second uplink ;
the second downlink is related to the carrier bandwidth of the second uplink.

An embodiment in which the second downlink and the second uplink are related in frequency domain is that XDL and XUL correspond to a same reference point in frequency domain. Specifically, both XDL and XUL use the same Point A or the same CRB#0 (Common RB 0) as a reference to calculate the position and size of the corresponding frequency domain resources. Wherein, the acquisition of Point A or CRB#0 can be based on the frequency domain position of SSB (for example, offsetToPointA) or based on the absolute frequency domain position (for example, absoluteFrequencyPointA). The advantage of this method is that it can save signaling overhead.

In addition, an embodiment in which XDL and XUL are related in frequency domain is that the frequency band corresponding to XDL is related to the frequency band corresponding to XUL. Specifically, the information of the frequency band corresponding to XDL may be the same as the information of the frequency band corresponding to XUL, or the information of the frequency band corresponding to XDL may be a subset of the information of the frequency band corresponding to XUL. In the case that the information of the frequency band corresponding to XDL is the same as the information of the frequency band corresponding to XUL, the configuration information corresponding to XDL does not include frequency band indication information; or in the case that the information of the frequency band corresponding to XDL is a subset of the information of the frequency band corresponding to XUL, the configuration information corresponding to XDL includes frequency band indication information. For example, according to the method described in the previous example, XUL can obtain its corresponding information of frequency band in different ways. Here, generally, XDL and XUL are corresponding, so the frequency band corresponding to XDL may be the same as XUL frequency band or a subset of XUL frequency band. In the case that the frequency band corresponding to XDL is the same as the frequency band corresponding to XUL, the information of the frequency band corresponding to XDL does not need to be indicated separately, that is, XDL shares the information of the frequency band of XUL. The frequencyBandList in the FrequencyInfoDL-SIB of XDL does not exist, for example, as shown in the table 7 below.

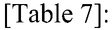

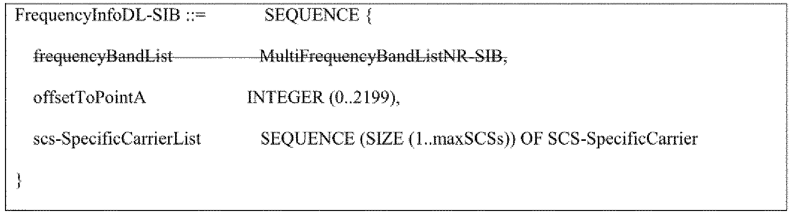

For the case that the frequency band corresponding to XDL is a subset of XUL frequency band, the information of the frequency band corresponding to XDL also needs to be indicated separately, that is, the frequencyBandList IE in the FrequencyInfoDL-SIB of XDL exists, for example, as shown in the table 8 below. And the frequency band indicated in the list cannot be existed in the frequency band which does not correspond to XUL. For example, XUL corresponds to frequency band #1 and frequency band #2; the frequency band corresponding to XDL cannot be the frequency band other than frequency band #1 and frequency band #2.

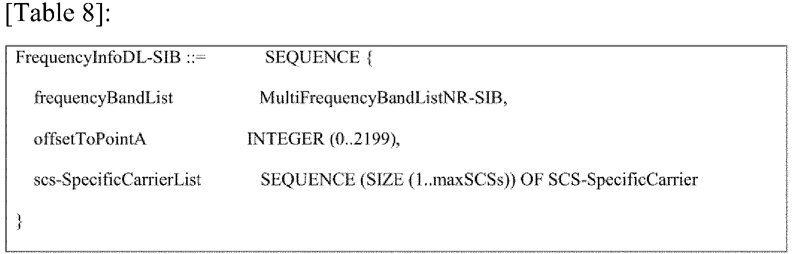

In addition, an embodiment in which XDL and XUL are related in frequency domain is that XDL is related to the carrier bandwidth of XUL. Specifically, the carrier bandwidth of XDL is included in the carrier bandwidth corresponding to XUL, or carrier bandwidth of XDL is equal to the carrier bandwidth corresponding to XUL.

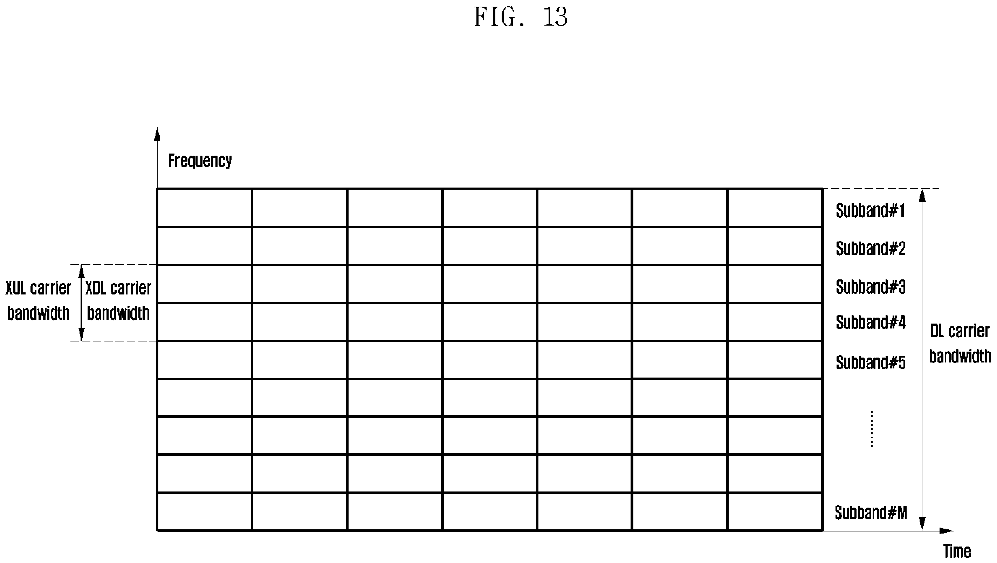

For example, the carrier bandwidth corresponding to XUL is obtained according to the method described in the previous example. The carrier bandwidth corresponding to XDL is the same as the carrier bandwidth corresponding to XUL. The carrier bandwidth corresponding to XUL is one or more consecutive subbands of the carrier bandwidth corresponding to DL. As shown in fig. 13, the carrier bandwidth corresponding to DL is divided into M subbands. The carrier bandwidth corresponding to DL (for example, when SCS = 15kHz) is indicated by SCS-SpecificCarrier. XUL carrier bandwidth consists of one or more consecutive subbands among the M subbands. Here, XUL carrier bandwidth is subband 3 and subband 4. It can be indicated by the subband indication information included in the XUL configuration information, such as the starting subband (subband #3) and the number of consecutive subbands (2). Furthermore, since XDL and XUL correspond to the same carrier bandwidth, the carrier bandwidth of XDL is also subband #3 and subband 4.

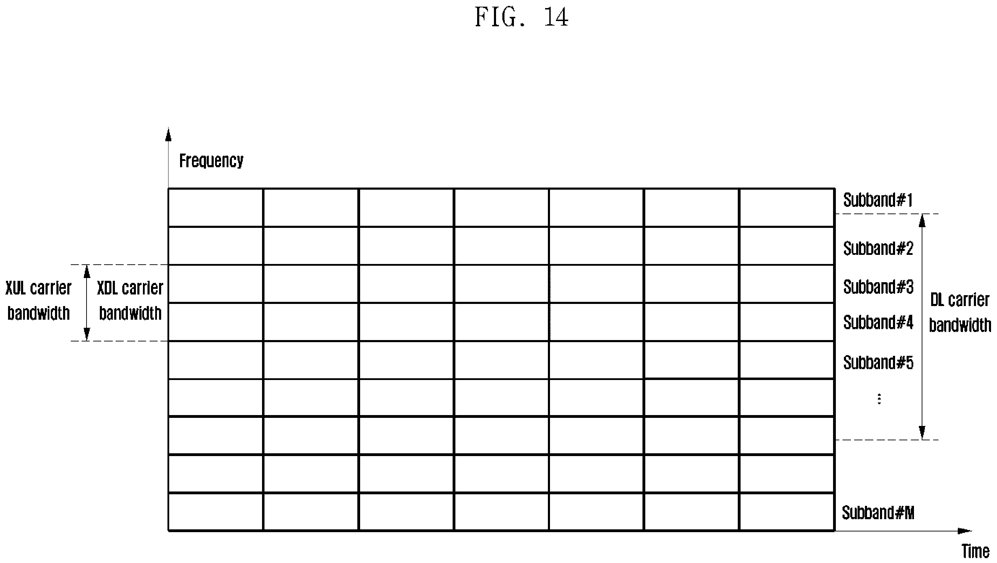

For example, the carrier bandwidth corresponding to XUL is obtained according to the method described in the previous example. The carrier bandwidth corresponding to XDL is the same as the carrier bandwidth corresponding to XUL. As shown in Figure 14, the frequency domain is divided into M subbands according to predefined rules. The carrier bandwidth corresponding to DL (for example, when SCS = 15kHz) is indicated by SCS-SpecificCarrier. Among them, subband #2 to subband #6 completely overlap with DL carrier bandwidth, and the XDL carrier bandwidth consists of one or more consecutive subbands among these subbands. Here, XUL carrier bandwidth is subband 3 and subband 4. It can be indicated by the subband indication information included in the XUL configuration information, such as the starting subband (subband #2) and the number of consecutive subbands (2). Furthermore, since XDL and XUL correspond to the same carrier bandwidth, the carrier bandwidth of XDL is also subband #3 and subband 4.

According to an embodiment of the present disclosure, the second downlink is related to one or more BWPs.

An embodiment in which the second downlink is related to one or more BWPs is that XDL can be configured with one or more BWPs, or the configuration information corresponding to XDL includes the configuration information of one or more BWPs. The specific way of configuration can be predefined or explicitly indicated. For example, XDL BWP#0 is configured in a predefined way, and XDL BWP#1 to XDL BWP#4 are configured in an explicit way.

In the above, the exemplary embodiments of the network devices are described with the following cases respectively: in which the cell configuration information includes the first downlink configuration information, the first uplink configuration information, and the second uplink configuration information; and in which the cell configuration information includes the first downlink configuration information, the first uplink configuration information, the second uplink configuration information and the second downlink configuration information.

According to another embodiment of the present disclosure, there are cases in which the cell configuration information includes the first downlink configuration information, the first uplink configuration information, and the second downlink configuration information. In this case, the operation of the network device is similar to that in the following case: in which the cell configuration information includes the first downlink configuration information, the first uplink configuration information, and the second uplink configuration information. To avoid redundancy, please refer to the above description for details, which will not be repeated here.

### Embodiment 2

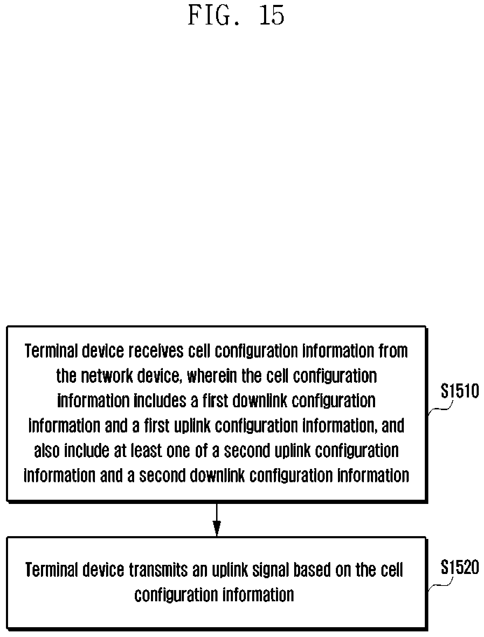

According to an exemplary embodiment of the present disclosure, the present disclosure proposes a terminal device (UE) and a method for the terminal device. Fig. 15 exemplarily illustrates a method for a terminal device, which includes:
S1510, the terminal device receives cell configuration information from the network device, wherein the cell configuration information includes a first downlink configuration information and a first uplink configuration information, may also include at least one of a second uplink configuration information and a second downlink configuration information, wherein the first downlink configuration information is for configuring the first downlink, the first uplink configuration information is for configuring the first uplink, the second uplink configuration information is for configuring the second uplink, and the second downlink configuration information is for configuring the second downlink. The first uplink and the first downlink correspond to a same reference point in frequency domain; the second uplink satisfies at least one of the following conditions: the second uplink and the first downlink are related in frequency domain; the second uplink and the first uplink are related in frequency domain.
S1520, the terminal device transmits an uplink signal based on the cell configuration information.

As mentioned above, the first downlink is specifically referred as DL, or normal DL, or downlink carrier, or downlink virtual carrier, and DL is taken as an example; the first uplink is specifically referred as UL, or normal UL (normal UL), or uplink carrier, or uplink virtual carrier, and UL is taken as an example; the second uplink is related to cross division duplex or non-overlapping subband full duplex, specifically referred as (XDD-UL, XUL), or referred as non-overlapping subband full duplex uplink, or cross division duplex uplink carrier, or cross division duplex uplink virtual carrier, and XUL is taken as an example.

At S1510, the terminal device receives the cell configuration information from the network device. For details of the cell configuration information, please refer to the description in Embodiment 1, which is not repeated here.

Below, an exemplary embodiment of the present disclosure will be described with the following case as example: in which the cell configuration information includes the first downlink configuration information, the first uplink configuration information, and the second uplink configuration information.

After receiving the cell configuration information from the network device, the terminal device may determine the frequency domain information of the second uplink according to the frequency domain information of the first downlink.

The cell configuration information (for example, ServingCellConfigCommonSIB) received by the terminal from the network device includes the configuration information (for example, downlinkConfigCommon) of the first downlink. Wherein, the first downlink configuration information, that is, the configuration information of DL, includes the frequency domain information of DL (for example, FrequencyInfoDL-SIB or FrequencyInfoDL). The terminal device determines the frequency domain information of XUL according to the frequency domain information of the DL.

According to an embodiment, the terminal device determining the frequency domain information of the second uplink according to the frequency domain information of the first downlink comprises at least one of the following:
the terminal device determines the reference point in frequency domain of the second uplink according to the reference point in frequency domain of the first downlink;
the terminal device determines the frequency band of the second uplink according to the frequency band of the first downlink;
the terminal device determines the carrier bandwidth of the second uplink according to the carrier bandwidth of the first downlink.

An embodiment in which the terminal device determines the frequency domain information of the second uplink according to the frequency domain information of the first downlink is that the terminal device determines the reference point in frequency domain of XUL according to the reference point in frequency domain of DL. After receiving the cell configuration information, the terminal determines the frequency domain position of point A (or CRB#0) according to the frequency domain position of SSB corresponding to the cell configuration information and the relative frequency domain position (offsetToPointA) in the cell configuration information, or determines the frequency domain position of point A (or CRB#0) according to the absolute frequency domain position (absoluteFrequencyPointA) in the cell configuration information. If XUL and DL share the reference point in frequency domain, the terminal device obtains the information of reference point in frequency domain of XUL according to the frequency domain position of point A (or CRB#0) of DL; or, DL and XUL correspond to the same point A (or the same CRB#0).

An embodiment in which the terminal device determines the frequency domain information of the second uplink according to the frequency domain information of the first downlink is that the terminal device determines the frequency band corresponding to XUL according to the frequency band corresponding to DL. With reference to the description in Embodiment 1, the information of the frequency band of DL is carried in frequencyBandList IE. After receiving the information of the frequency band, the terminal device selects one of the frequency bands (for example, frequency band #1) according to the capabilities of the terminal device. On one hand, after the frequency band of DL is determined, if XUL does not have a corresponding frequency band indication (frequencyBandList), the terminal device determines the frequency band of XUL according to the frequency band of DL (that is, the frequency band of XUL is the same as the frequency band of DL, and it is frequency band #1 as well). On the other hand, after the frequency band of DL is determined, if XUL also has a corresponding frequency band indication (frequencyBandList) and the frequency band of DL (frequency band #1) is included in the indication, the terminal device determines that the frequency band corresponding to XUL is frequency band # 1 as well; and if XUL also has a corresponding frequency band indication (frequencyBandList) and the frequency band of DL (frequency band #1) is not included in the indication, the terminal device determines that XUL does not exist in this cell (e.g., PCell) (or ignores the configuration information corresponding to XUL at this time).

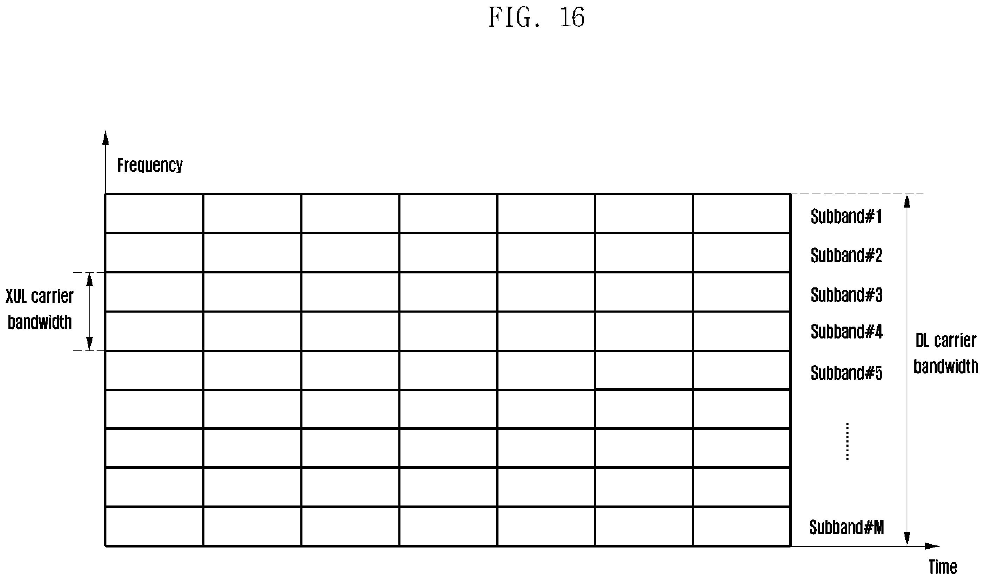

An embodiment in which the terminal device determines the frequency domain information of the second uplink according to the frequency domain information of the first downlink is that the terminal device determines the carrier bandwidth corresponding to XUL according to the carrier bandwidth corresponding to DL. With reference to the description in Embodiment 1, the information of the frequency band of DL is carried in SCS-SpecificCarrier IE. After receiving the carrier bandwidth information, the terminal device determines the carrier bandwidth corresponding to DL. Here, the terminal device considers that the carrier bandwidth of DL is divided into M subbands. In addition, the corresponding XUL configuration information includes subband indication information, that is, indicating the starting subband and the number of consecutive subbands. Thereby, the terminal device determines the carrier bandwidth of XUL. For example, as shown in Fig. 16, when the starting subband is subband #3 and the number of consecutive subbands is 2, the terminal device determines that the XUL carrier bandwidth is subband #3 and subband #4.

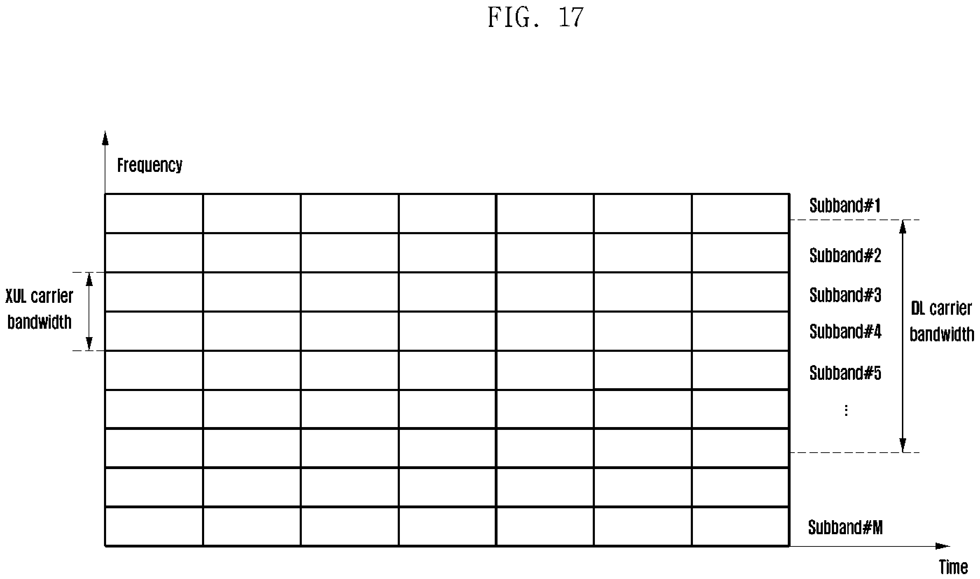

Here, the terminal device can also consider that the frequency domain is divided into M subbands according to predefined rules. The carrier bandwidth corresponding to XUL is one or more consecutive subbands overlapping (partially overlapping or completely overlapping) with the carrier bandwidth corresponding to DL. In addition, the corresponding XUL configuration information includes subband indication information, that is, indicating the starting subband and the number of consecutive subbands. Thereby, the terminal device determines the carrier bandwidth of XUL. For example, as shown in Fig. 17, when the starting subband is subband #3 and the number of consecutive subbands is 2, the terminal device determines that the XUL carrier bandwidth is subband #3 and subband #4.

According to an embodiment, the terminal device determines the frequency domain information of the second uplink according to the frequency domain information of the first uplink.

The cell configuration information (for example, ServingCellConfigCommonSIB) received by the terminal from the network device includes the configuration information (for example, uplinkConfigCommon) of the first uplink. Wherein, the first uplink configuration information, that is, the configuration information of the UL, includes the frequency domain information of the UL (for example, frequency information-SIB or FrequencyInfoUL). The terminal determines the frequency domain information of XUL according to the frequency domain information of the UL.

According to an embodiment, the terminal device determining the frequency domain information of the second uplink according to the frequency domain information of the first uplink comprises at least one of the following:
the terminal device determines the reference point in frequency domain of the second uplink according to the reference point in frequency domain of the first uplink;
the terminal device determines the frequency band of the second uplink according to the frequency band of the first uplink;
the terminal device determines the carrier bandwidth of the second uplink according to the carrier bandwidth of the first uplink.

An embodiment in which the terminal device determines the frequency domain information of the second uplink according to the frequency domain information of the first uplink is that the terminal device obtains the reference point in frequency domain of XUL determined according to the reference point in frequency domain of UL. After receiving the cell configuration information, the terminal obtains the reference point in frequency domain (Point A or CRB#0) according to the cell configuration information. The terminal device obtains the information of the reference point in frequency domain of XUL according to the frequency domain location of point A (or CRB#0) of UL. Or, UL and XUL correspond to the same point A (or the same CRB#0).

An embodiment in which the terminal device determines the frequency domain information of the second uplink according to the frequency domain information of the first uplink is that the terminal device determines the frequency band corresponding to XUL according to the frequency band corresponding to UL. With reference to the description in Embodiment 1, the information of the frequency band of UL is the same as that of DL, and is indicated by the information of the frequency band of DL (frequencyBandList). After receiving the information of the frequency band, the terminal device selects one of the frequency bands (for example, frequency band #1) according to the capabilities of the terminal device. On one hand, after the frequency band of DL is determined, the frequency band of UL is also obtained accordingly. If XUL does not have a corresponding frequency band indication (frequencyBandList), the terminal device determines the frequency band of XUL according to the frequency band of UL (that is, the frequency band of XUL is the same as the frequency band of UL, and it is frequency band #1 as well). On the other hand, after the frequency band of DL is determined, the frequency band of UL is also obtained accordingly. If XUL also has a corresponding frequency band indication (frequencyBandList) and the frequency band of DL (frequency band #1) is included in the indication, the terminal device determines that the frequency band corresponding to XUL is frequency band # 1 as well; If XUL also has a corresponding frequency band indication (frequencyBandList) and the frequency band of DL (frequency band #1) is not included in the indication, the terminal device considers that XUL does not exist in this cell (or ignores the configuration information corresponding to XUL).

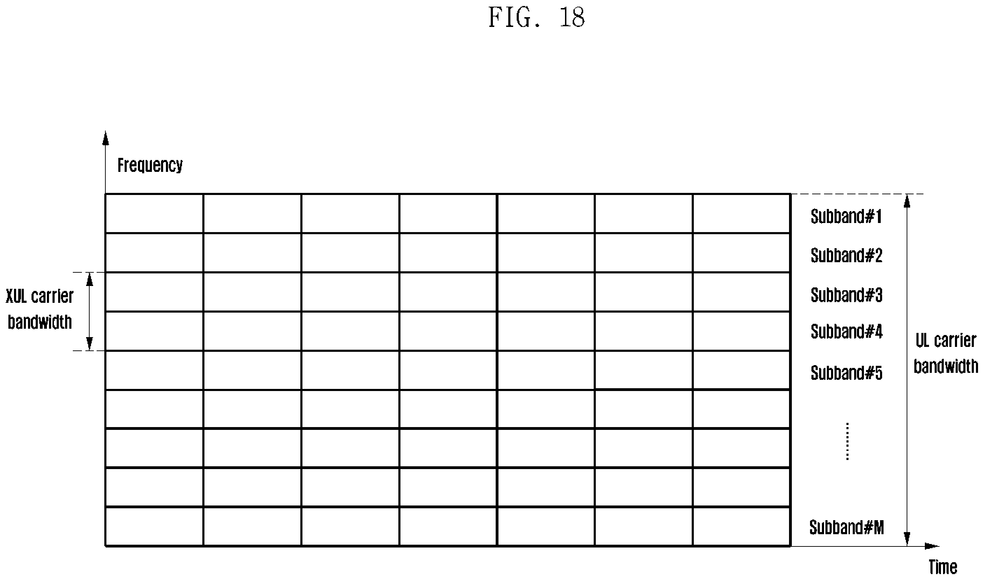

An embodiment in which the terminal device determines the frequency domain information of the second uplink according to the frequency domain information of the first uplink is that the terminal device determines the carrier bandwidth corresponding to XUL according to the carrier bandwidth corresponding to UL. With reference to the description in Embodiment 1, the information of the frequency band of DL is carried in SCS-SpecificCarrier IE. After receiving the carrier bandwidth information, the terminal device determines the carrier bandwidth corresponding to UL. Here, the terminal device considers that the carrier bandwidth of UL is divided into M subbands. In addition, the corresponding XUL configuration information includes subband indication information, that is, indicating the starting subband and the number of consecutive subbands. Thereby, the terminal device determines the carrier bandwidth of XUL. For example, as shown in Fig. 18, when the starting subband is subband #3 and the number of consecutive subbands is 2, the terminal device determines that the DL carrier is subband #3 and subband #4.

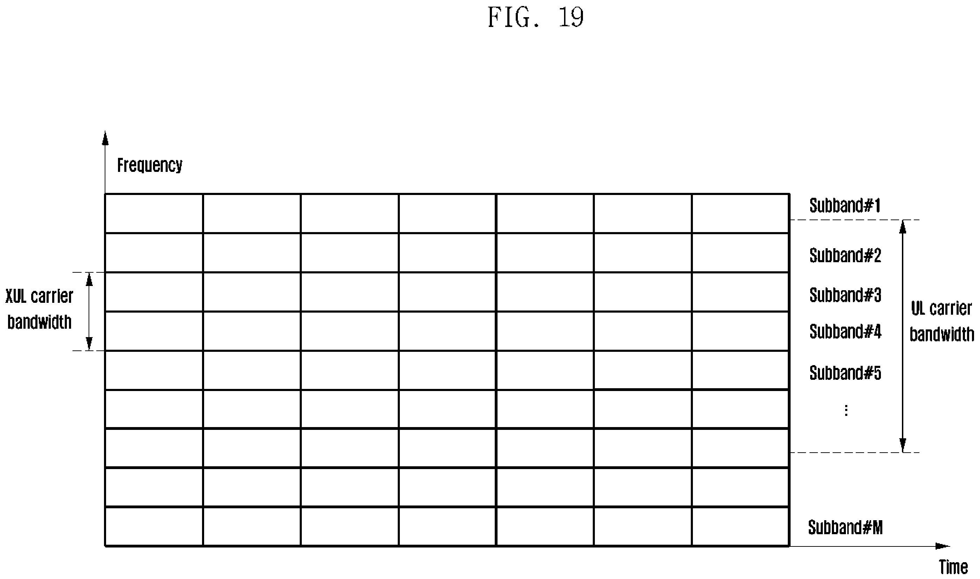

Here, the terminal device can also consider that the frequency domain is divided into M subbands according to predefined rules. The carrier bandwidth corresponding to XUL is one or more consecutive subbands overlapping (partially overlapping or completely overlapping) with the carrier bandwidth corresponding to UL. In addition, the corresponding XUL configuration information includes subband indication information, that is, indicating the starting subband and the number of consecutive subbands. Thereby, the terminal device determines the carrier bandwidth of XUL. For example, as shown in Fig. 19, when the starting subband is subband #3 and the number of consecutive subbands is 2, the terminal device determines that the DL carrier is subband #3 and subband #4.

According to an embodiment of the present disclosure, a first resource is used to transmit a first uplink signal or channel on the first uplink; the second resource is for transmitting a second uplink signal or channel on the second uplink; and in the case that the first resource and the second resource overlap in the time domain, the terminal device performs one of the following operations:
transmitting a first uplink signal or channel;
transmitting a second uplink signal or channel;
dropping/not transmitting the first uplink signal or channel;
dropping/not transmitting the second uplink signal or channel;
multiplexing the UCI corresponding to the first uplink signal or channel with the UCI corresponding to the second uplink signal or channel.

The first uplink signal or channel is one of PRACH, PUSCH, PUCCH and sounding reference signal (SRS), and the second uplink signal or channel is one of PRACH, PUSCH, PUCCH and SRS. The below description is made with the following as example: the first uplink signal or channel is PUCCH and the second uplink signal or channel is PUCCH. However, those skilled in the art should understand that the present invention is not limited to this.

The cell configuration information may include configuration information of UL and XUL. The configuration information of UL may include configuration parameters of PUCCH; the configuration information of XUL may also include configuration parameters of PUCCH.

The terminal device is related to the first PUCCH resource (PUCCH resource#1) (in other words, the terminal device obtains information related to PUCCH resource#1 according to the indication information of the network device), and PUCCH resource#1 is for transmitting PUCCH # 1 on the UL; in addition, the terminal device is related to the second PUCCH resource (PUCCH resource#2) (in other words, the terminal device obtains information related to PUCCH resource#2 according to the indication information of the network device), and PUCCH resource#2 is for transmitting PUCCH#2 on XUL. And PUCCH resource#1 and PUCCH resource#2 overlap in time domain. Here, the time domain overlapping may be that PUCCH resource#1 and PUCCH resource#2 have overlapping symbols, or that PUCCH resource#1 and PUCCH resource#2 are in the same slot. In this case, due to the limitation of the capability of the terminal device, the terminal device cannot transmit two PUCCH simultaneously, so at least one of the following operations is performed according to a predefined rule or the indication of the network device:
transmitting PUCCH # 1;
transmitting PUCCH # 2;
dropping/not transmitting PUCCH # 1;
dropping/not transmitting PUCCH # 2;
multiplexing the UCI corresponding to PUCCH#1 and the UCI corresponding to PUCCH#2.

The above method has the advantage that the terminal device can handle the situation that the PUCCH transmission on UL conflicts with the PUCCH transmission on XUL. Therefore, the network device can schedule system resources more flexibly, and the terminal device can handle the conflict between PUCCH transmission on UL and PUCCH transmission on XUL, thus improving the system efficiency.

According to an embodiment of the present disclosure, the terminal device may further perform random access on the first uplink or the second uplink.

For random access, the network device configures the RACH parameter for the terminal device on UL and also configures the RACH parameter on XUL. For example, the network device configures the RACH parameter (rach-ConfigCommon) on UL and also configures the RACH parameter (rach-ConfigCommon) on XUL. That is, the configuration information corresponding to the UL includes the RACH parameter, and the configuration information corresponding to the XUL also includes the RACH parameter.

In this case, the terminal device can perform random access according to one or more of the following methods.

### Method 1:

The terminal performs random access procedure on XUL based on predefined rules. This has the advantage that when the terminal device supports XDD (XUL), XUL is prioritized for the selection of random access, so that the random access resources of UL in the cell are reserved for the terminal device that does not support XDD (XUL) for random access. The efficiency of resource utilization is improved.

### Method 2:

The terminal device performs random access procedure on UL based on predefined rules. This has the advantage of avoiding the conflict among multiple terminal devices caused by the terminal devices independently selecting the random access resources on XUL. In this case, the terminal device usually only performs random access procedure on UL, unless in the case that explicit signaling from network device is received, the terminal device uses the random access resources of XUL to perform random access (refer to Method 4).

### Method 3:

The RACH parameter of XUL may include a threshold (for example, rsrp-ThresholdSSB-XUL). The terminal device selects XUL or UL for random access procedure based on the threshold; the terminal device selects XUL for random access procedure based on the threshold. Specifically, when the downlink path loss reference (for example, RSRP of SSB) is lower than the threshold, the terminal device selects XUL for random access procedure; When the downlink path loss reference is equal to or higher than the threshold, the terminal device selects UL for random access procedure. This has the advantage that when the RSRP of the downlink path loss reference is lower than the threshold, it means that the channel quality decreases, or the coverage of the channel decreases. At this time, the random access procedure can be better completed on this channel by selecting XUL. The reason is that XUL has many uplink consecutive occasion and can carry a longer physical random access channel format (PRACH format). The longer PRACH format means better coverage, so the performance of the system can be better improved in this situation.

### Method 4:

The network device may also indicate whether the terminal device performs random access in UL or XUL by transmitting indication information (for example, explicit indication information) to the terminal device. The terminal device determines whether to perform random access procedure on UL or XUL based on the instruction of the network device. The explicit indication information is DCI, MAC-CE or RRC. The advantage of this method is that the network device can indicate the terminal device whether to perform the initial access on UL or XUL according to the uplink channel state or the uplink traffic condition, so as to improve the success rate of the initial access of the terminal device, or optimize the efficiency of resource utilization.

According to an embodiment of the present disclosure, the terminal device calculates a radio network temporary identity (RNTI) related to the RACH in association with the second uplink.

When a terminal device transmits a Random Access Preamble in a PRACH occasion, it needs to receive the RAR corresponding to the random access preamble in the corresponding RAR window, wherein the RAR is scrambled by RNTI related to RACH. Here, the terminal device needs to calculate the RNTI related to the RACH. The calculation method of RNTI related to RACH is illustrated by taking RA-RNTI and MSGB-RNTI as examples.

When the random access preamble is transmitted in a PRACH occasion, the calculation method of RA-RNTI corresponding to the PRACH occasion is as follows: $RA - RNTI = 1 + s_id + 14 X t_id + 14 X 80 X f_id + 14 X 80 X 8 X ul_id$

Where s_id refers to the index of the first OFDM symbol in PRACH occasion, where 0 ≤ s_id < 14; t_id refers to the index of the first slot of PRACH occasion in the system frame, where 0 ≤ T _ id < 80; f_id refers to the index of PRACH occasion in frequency domain, where 0 ≤ f_id < 8; and ul_id refers to the uplink index corresponding to random access preamble transmission, for example, for UL, it corresponds to ul_id=0, and for XUL it corresponds to ul_id=1.

In addition, when the random access preamble is transmitted in a PRACH occasion, the calculation method of MSGB-RNTI corresponding to the PRACH occasion is as follows: 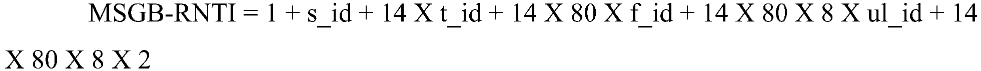 MSGB-RNTI = 1 + s_id + 14 X t_id + 14 X 80 X f_id + 14 X 80 X 8 X ul_id + 14 X80X8X2

Where s_id refers to the index of the first OFDM symbol in PRACH occasion, where 0 ≤ s_id < 14; t_id refers to the index of the first slot of PRACH occasion in the system frame, where 0 ≤ T _ id < 80; f_id refers to the index of PRACH occasion in frequency domain, where 0 ≤ f_id < 8; and ul_id refers to the uplink index corresponding to random access preamble transmission, for example, for UL, it corresponds to ul_id=0, and for XUL, it corresponds to ul_id=1.

The above method provides the calculation method of RNTI related to PRACH in the scenario of configuring XUL, and clarifies the corresponding behavior at terminal side, so that the terminal can determine whether the base station has received the PRACH preamble transmitted on XUL according to the RNTI of RAR.

The terminal device determines the transmission power of the uplink signal or uplink channel on the second uplink according to the maximum output power of the terminal on the second uplink (UE configured maximum output power, P_{CMAX}), which is same as that on the first uplink .

The uplink signal or uplink channel on the second uplink may be at least one of PUSCH, PUCCH, SRS and PRACH.

Taking PUSCH as an example, the transmission power of PUSCH is determined by the following formula 1: ${P}_{PUSCH , b , f , c} \left(i, j, {q}_{d}, l\right) = min \left\{\begin{matrix}{P}_{CMAX , f , c} \left(i\right) , \\ {P}_{O _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\}$ Formula 1

The above formula 1 shows that the maximum output power (P_{CMAX}) of the terminal needs to be considered in the calculation of PUSCH transmission power. In connection with the above example, the network device configures UL and XUL for the terminal device. For UL, according to the indication of the network device or a predefined rule, the terminal device obtains the corresponding P_{CMAX} which is used to determine the transmission power of PUSCH on UL. For transmitting the PUSCH on XUL (XUL is configured with PUSCH), the terminal device determines the transmission power of the PUSCH on XUL according to the P_{CMAX} corresponding to UL. That is, the transmission power of PUSCH on XUL is less than or equal to P_{CMAX} corresponding to UL. This has the advantage that, generally speaking, in XDD, the frequency bands corresponding to UL and XUL are the same, and the power requirements are similar. This method enables UL and XUL to share the maximum output power of the terminal, avoiding indicating the maximum output power of XUL seperately and saving signaling overhead.

Taking PUCCH as an example, the transmission power of PUCCH is determined by the following formula 2: ${P}_{PUCCH , b , f , c} \left(i,{q}_{u ,}{q}_{d},l\right) = min \left\{\begin{matrix}{P}_{CMAX , f , c} \left(i\right) , \\ {P}_{O _ PUCCH , b , f , c} \left({q}_{u}\right) + 10 {log}_{10} \left({2}^{μ}⋅{M}_{RB , b , f , c}^{PUCCH}\left(i\right)\right) + {PL}_{b , f , c} \left({q}_{d}\right) + {Δ}_{F _ PUCCH} \left(F\right) + {Δ}_{TF , b , f , c} \left(i\right) + {g}_{b , f , c} \left(i, l\right)\end{matrix}\right\}$ Formula 2

The above formula 2 shows that the maximum output power of the terminal (P_{CMAX}) should also be considered in the calculation of the transmission power of the PUCCH. In connection with the above example, the network device configures UL and XUL for the terminal device. For UL, according to the indication of the network device or a predefined rule, the terminal device obtains the corresponding P_{CMAX} which is used to determine the transmission power of the PUCCH on UL. For transmitting PUCCH on XUL (XUL is configured with PUCCH), the terminal device determines the transmission power of PUCCH on XUL according to P_{CMAX} corresponding to UL. That is, the transmission power of PUCCH on XUL is less than or equal to P_{CMAX} corresponding to UL. This has the advantage that, generally speaking, in XDD, the frequency bands corresponding to UL and XUL are the same, and the power requirements are similar. This method enables UL and XUL to share the maximum output power of the terminal, avoiding indicating the maximum output power of XUL separately and saving signaling overhead.

Taking SRS as an example, the transmission power of SRS is determined by the following formula 3: ${P}_{SRS , b , f , c} \left(i, {q}_{s}, l\right) = min \left\{\begin{matrix}{P}_{CMAX , f , c} \left(i\right) , \\ {P}_{O _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\}$ Formula 3

The above formula 3 shows that the maximum output power (P_{CMAX}) of the terminal needs to be considered in the calculation of the transmission power of SRS. In connection with the above example, the network device configures UL and XUL for the terminal device. For UL, according to the indication of the network device or a predefined rule, the terminal device obtains the corresponding P_{CMAX} which is used to determine the transmission power of SRS on UL. For transmitting SRS on XUL (XUL is configure with SRS), the terminal device determines the transmission power of SRS on XUL according to P_{CMAX} corresponding to UL. That is, the transmission power of SRS on XUL is less than or equal to P_{CMAX} corresponding to UL. This has the advantage that, generally speaking, in XDD, the frequency bands corresponding to UL and XUL are the same, and the power requirements are similar. This method enables UL and XUL to share the maximum output power of the terminal, avoiding indicating the maximum output power of XUL separately and saving signaling overhead.

Taking PRACH as an example, the transmission power of PRACH is determined by the following formula 4: ${P}_{PRACH _ b , f , c} \left(i\right) = min \left\{{P}_{CMAX , f , c}\left(i\right),{P}_{PRACH , target , f , c}+{PL}_{b , f , c}\right\}$ Formula 4

The above formula 4 shows that the maximum output power (P_{CMAX}) of the terminal needs to be considered in the calculation of the transmission power of PRACH. In connection with the above example, the network device configures UL and XUL for the terminal device. For UL, according to the indication of the network device or a predefined rule, the terminal device obtains the corresponding P_{CMAX} which is used to determine the transmission power of PRACH on UL. For transmitting the PRACH on XUL (XUL is configured PRACH), the terminal device determines the transmission power of the PRACH on XUL according to the P_{CMAX} corresponding to UL. That is, the transmission power of PRACH on XUL is less than or equal to P_{CMAX} corresponding to UL. This has the advantage that, generally speaking, in XDD, the frequency bands corresponding to UL and XUL are the same, and the power requirements are similar. This method enables UL and XUL to share the maximum output power of the terminal, avoiding indicating the maximum output power of XUL separately and saving signaling overhead.

Next, an exemplary embodiment of the present disclosure will be described with the following case as example: in which the cell configuration information further includes the second downlink configuration information.

According to an embodiment of the present disclosure, the cell configuration information may further include second downlink configuration information, which is used to configure the second downlink; wherein the second downlink satisfies at least one of the following conditions:
The second downlink and the first downlink are related in frequency domain;
The second downlink and the second uplink are related in frequency domain.

It is further explained by examples below. Wherein, the second downlink is related to cross division duplex or subband non-overlapping full duplex, specifically referred as cross division duplex downlink (XDD-DL, XDL) or subband non-overlapping full duplex downlink, and XDL is taken as an example.

The terminal device receives cell configuration information from a network device. The cell configuration information includes configuration information of XDL. For details, please refer to the description in Embodiment 1, which will not be repeated here.

The terminal device determines the frequency domain information of the second downlink according to the frequency domain information of the first downlink.

The cell configuration information (for example, ServingCellConfigCommonSIB) received by the terminal from the network device includes the configuration information (for example, downlinkConfigCommon) of the first downlink. Wherein, the first downlink configuration information, that is, the configuration information of DL, includes the frequency domain information of DL (for example, FrequencyInfoDL-SIB or FrequencyInfoDL). The terminal device determines the frequency domain information of XDL according to the frequency domain information of the DL.

The terminal device determining the frequency domain information of the second downlink according to the frequency domain information of the first downlink comprises at least one of the following:
the terminal device determines the reference point in frequency domain of the second downlink according to the reference point in frequency domain of the first downlink;
the terminal device determines the frequency band of the second downlink according to the frequency band of the first downlink ;
the terminal device determines the carrier bandwidth of the second downlink according to the carrier bandwidth of the first downlink.

An embodiment in which the terminal device determines the frequency domain information of the second uplink according to the frequency domain information of the first downlink is that the terminal device determines the reference point in frequency domain of XDL according to the reference point in frequency domain of DL. After receiving the cell configuration information, the terminal determines the frequency domain position of point A (or CRB#0) according to the frequency domain position of SSB corresponding to the cell configuration information and the relative frequency domain position (offsetToPointA) in the cell configuration information, or determines the frequency domain position of point A (or CRB#0) according to the absolute frequency domain position (absoluteFrequencyPointA) in the cell configuration information. If XDL and DL share the reference point in frequency domain, the terminal device obtains the information of reference point in frequency domain of XDL according to the frequency domain position of point A (or CRB#0) of DL; or, DL and XDL correspond to the same point A (or the same CRB#0).

An embodiment in which the terminal device determines the frequency domain information of the second uplink according to the frequency domain information of the first downlink is that the terminal device determines the frequency band corresponding to XDL according to the frequency band corresponding to DL. With reference to the description in Embodiment 1, the information of the frequency band of DL is carried in frequencyBandList IE. After receiving the information of the frequency band, the terminal device selects one of the frequency bands (for example, frequency band #1) according to the capabilities of the terminal device. On one hand, after the frequency band of DL is determined, if XDL does not have a corresponding frequency band indication (frequencyBandList), the terminal device determines the frequency band of XDL according to the frequency band of DL (that is, the frequency band of XDL is the same as the frequency band of DL, and it is frequency band #1 as well). On the other hand, after the frequency band of DL is determined, if XDL also has a corresponding frequency band indication (frequencyBandList) and the frequency band of DL (frequency band #1) is included in the indication, the terminal device determines that the frequency band corresponding to XDL is frequency band # 1 as well; and if XDL also has a corresponding frequency band indication (frequencyBandList) and the frequency band of DL (frequency band #1) is not included in the indication, the terminal device determines that XDL does not exist in this cell (or ignores the configuration information corresponding to XDL at this time).

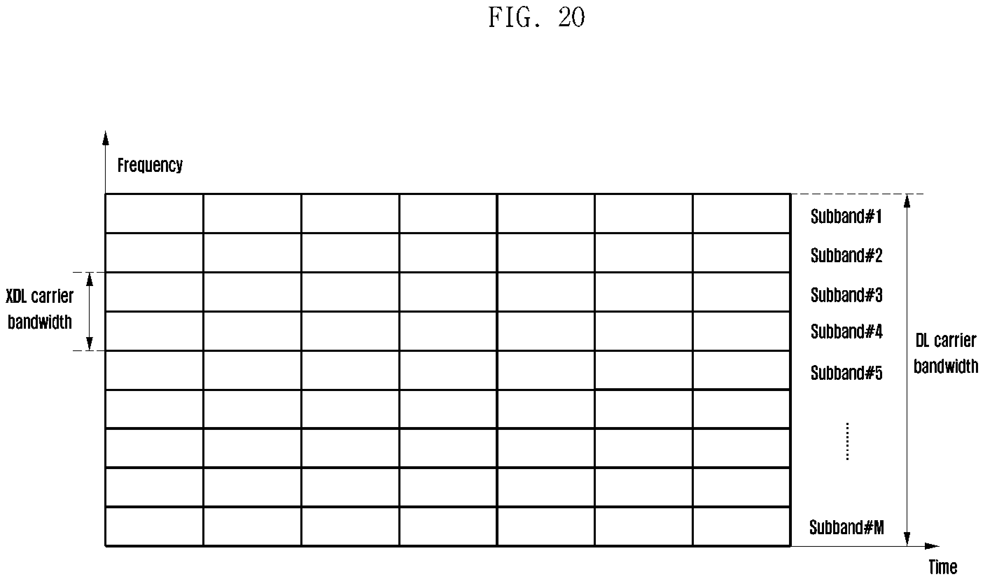

An embodiment in which the terminal device determines the frequency domain information of the second uplink according to the frequency domain information of the first downlink is that the terminal device determines the carrier bandwidth corresponding to XDL according to the carrier bandwidth corresponding to DL. With reference to the description in Embodiment 1, the information of the frequency band of DL is carried in SCS-SpecificCarrier IE. After receiving the carrier bandwidth information, the terminal device determines the carrier bandwidth corresponding to DL. Here, the terminal device considers that the carrier bandwidth of DL is divided into M subbands. In addition, the corresponding XDL configuration information includes subband indication information, that is, indicating the starting subband and the number of consecutive subbands. Thereby, the terminal device determines the carrier bandwidth of XDL. For example, as shown in Fig. 20, when the starting subband is subband #3 and the number of consecutive subbands is 2, the terminal device determines that the XDL carrier bandwidth is subband #3 and subband #4.

Here, the terminal device can also consider that the frequency domain is divided into M subbands according to predefined rules. The carrier bandwidth corresponding to XDL is one or more consecutive subbands overlapping (partially overlapping or completely overlapping) with the carrier bandwidth corresponding to DL. In addition, the corresponding XDL configuration information includes subband indication information, that is, indicating the starting subband and the number of consecutive subbands. Thereby, the terminal device determines the carrier bandwidth of XDL. For example, as shown in Fig. 17, when the starting subband is subband #3 and the number of consecutive subbands is 2, the terminal device determines that the XDL carrier bandwidth is subband #3 and subband #4.

The terminal device determines the frequency domain information of the second downlink according to the frequency domain information of the second uplink.

The cell configuration information (for example, ServingCellConfigCommonSIB) received by the terminal from the network device includes the configuration information (for example, uplinkConfigCommon) of the second uplink. Wherein, the second uplink configuration information, that is, the configuration information of XUL, includes the frequency domain information of XUL (for example, FrequencyInfoDL-SIB or FrequencyInfoDL). The terminal determines the frequency domain information of XDL according to the frequency domain information of XUL.

The terminal device determining the frequency domain information of the second downlink according to the frequency domain information of the second uplink comprises at least one of the following:
the terminal device determines the reference point in frequency domain of the second uplink according to the reference point in frequency domain of the second uplink;
the terminal device determines the frequency band of the second downlink according to the frequency band of the second uplink;
the terminal device determines the carrier bandwidth of the second downlink according to the carrier bandwidth of the second uplink.

An embodiment in which the terminal device determines the frequency domain information of the second uplink according to the frequency domain information of the second uplink is that the terminal device determines the reference point in frequency domain of XDL according to the reference point in frequency domain of XUL. After receiving the cell configuration information, the terminal obtains the reference point in frequency domain (Point A or CRB#0) of XUL according to the cell configuration information. The terminal obtains the information of the reference point in frequency domain of XDL according to the frequency domain position of point A (or CRB#0) of XUL. Or, XUL and XDL correspond to the same point A (or the same CRB#0).

An embodiment in which the terminal device determines the frequency domain information of the second downlink according to the frequency domain information of the second uplink is that the terminal device determines the frequency band corresponding to XDL according to the frequency band corresponding to XUL. With reference to the description in Embodiment 1, the information of the frequency band of XUL is carried in frequencyBandList IE. After receiving the information of the frequency band, the terminal device selects one of the frequency bands (for example, frequency band #1) with reference to the description of Embodiment 1. On one hand, after the frequency band of XUL is determined, if XDL does not have a corresponding frequency band indication (frequencyBandList), the terminal device determines the frequency band of XDL according to the frequency band of XUL (that is, the frequency band of XDL is the same as the frequency band of DL, which is also frequency band #1). On the other hand, after the frequency band of XUL is determined, if XDL also has a frequency band indication (frequencyBandList) and the frequency band of XUL (frequency band #1) is included in the indication, the terminal device determines that the frequency band corresponding to XDL is frequency band # 1 as well; If XDL also has a frequency band indication (frequencyBandList) and the frequency band of XDL (frequency band #1) is not included in the indication, the terminal device considers that there is no XDL in this cell (or ignores the configuration information corresponding to XDL).

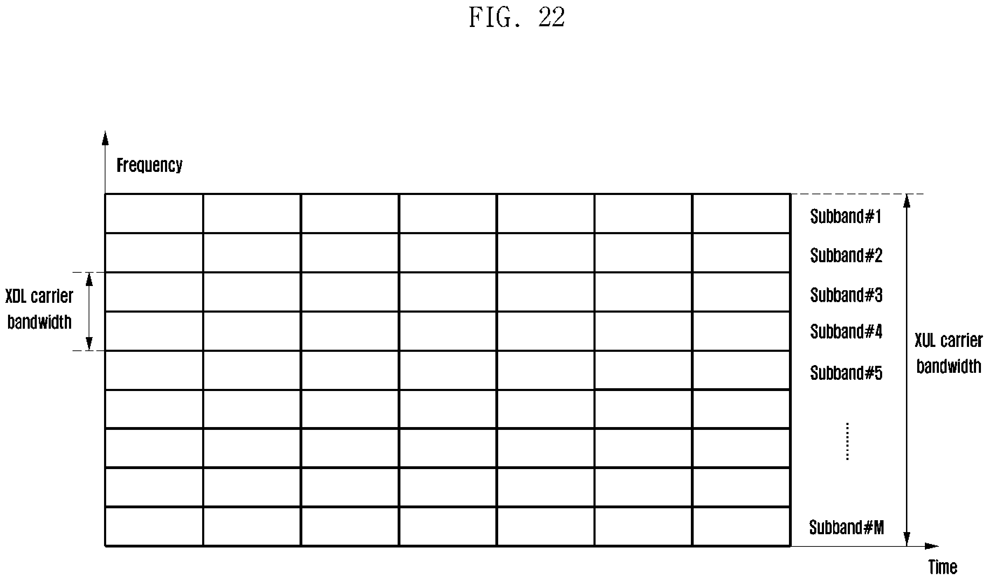

An embodiment in which the terminal device determines the frequency domain information of the second downlink according to the frequency domain information of the second uplink is that the terminal device determines the carrier bandwidth corresponding to XDL according to the carrier bandwidth corresponding to XUL. With reference to the description in Embodiment 1, the information of the frequency band of XUL is carried in SCS-SpecificCarrier IE. After receiving the carrier bandwidth information, the terminal device determines the carrier bandwidth corresponding to XUL. Here, the terminal device considers that the carrier bandwidth of XUL is divided into M subbands. In addition, the corresponding XDL configuration information includes subband indication information, that is, indicating the starting subband and the number of consecutive subbands. Thereby, the terminal device determines the carrier bandwidth of XDL. For example, as shown in Fig. 22, when the starting subband is subband #3 and the number of consecutive subbands is 2, the terminal device determines that the XDL carrier bandwidth is subband #3 and subband #4.

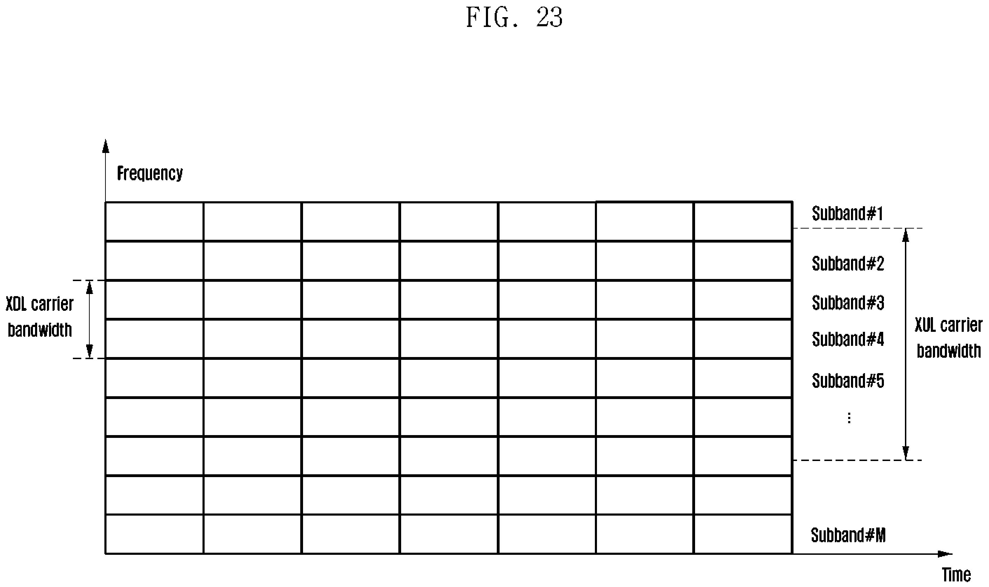

In addition, the terminal device can also consider that the frequency domain is divided into M subbands according to predefined rules. The carrier bandwidth corresponding to XDL is one or more consecutive subbands overlapping (partially overlapping or completely overlapping) with the carrier bandwidth corresponding to XUL. In addition, the corresponding XDL configuration information includes subband indication information, that is, indicating the starting subband and the number of consecutive subbands. Thereby, the terminal device determines the carrier bandwidth of XDL. For example, as shown in Fig. 23, when the starting subband is subband #3 and the number of consecutive subbands is 2, the terminal device determines that the XDL carrier bandwidth is subband #3 and subband #4.

In the above, the exemplary embodiments of the terminal device are described with the following cases respectively: in which the cell configuration information includes the first downlink configuration information, the first uplink configuration information, and the second uplink configuration information; and in which the cell configuration information includes the first downlink configuration information, the first uplink configuration information, the second uplink configuration information and the second downlink configuration information.

According to another embodiment of the present disclosure, there are cases in which the cell configuration information includes the first downlink configuration information, the first uplink configuration information, and the second downlink configuration information. In this case, the operation of the terminal device is similar to that in the following case: in which the cell configuration information includes the first downlink configuration information, the first uplink configuration information, and the second uplink configuration information. To avoid redundancy, please refer to the above description for details, which will not be repeated here.

Those skilled in the art will understand that the steps of the method described in this application can be directly embodied in hardware, in a software module executed by a processor, or in a combination of the hardware and software module. The software modules may reside in RAM memory, flash memory, ROM memory, EPROM memory, EEPROM memory, registers, hard disks, removable disks, or any other form of storage media known in the art. An exemplary storage medium is coupled to the processor so that the processor can read and write information from/to the storage medium. In the alternative solution, the storage medium may be integrated into the processor. The processor and the storage medium may reside in the ASIC. The ASIC may reside in the user terminal. In the alternative solution, the processor and the storage medium may reside as discrete components in the user terminal.

Those skilled in the art will understand that the various illustrative logical blocks, modules, circuits, and steps described in this application can be implemented as hardware, software, or a combination of hardware and software. In order to clearly illustrate the interchangeability of hardware and software, various illustrative components, blocks, modules, circuits, and steps are generally described above in the form of their function sets. Whether such function sets are implemented as hardware or software depends on the specific application and design constraints imposed on the overall system. Those skilled in the art can implement the described function set in different ways for each specific application, but such design decisions should not be construed as causing a departure from the scope of this application.

The various illustrative logic blocks, modules, and circuits described in this application may be implemented or executed by general-purpose processors, digital signal processors (DSP), application-specific integrated circuits (ASIC), field programmable gate arrays (FPGA) or other programmable logic devices, discrete gate or transistor logic, discrete hardware components, or any combination designed to perform the functions described herein. A general-purpose processor may be a microprocessor, but in the alternative embodiment, the processor may be any conventional processor, controller, microcontroller, or state machine. The processor may also be implemented as a combination of computing devices, for example, a combination of a DSP and a microprocessor, multiple microprocessors, one or more microprocessors in cooperation with a DSP core, or any other such configuration.

The steps of the method or algorithm described in this application can be directly embodied in hardware, in a software module executed by a processor, or in a combination of the hardware and software module. The software module may reside in RAM memory, flash memory, ROM memory, EPROM memory, EEPROM memory, registers, hard disk, removable disk, or any other form of storage medium known in the art. An exemplary storage medium is coupled to the processor such that the processor can read information from/write information to the storage medium. In the alternative embodiment, the storage medium may be integrated into the processor. The processor and the storage medium may reside in the ASIC. The ASIC may reside in the user terminal. In the alternative embodiment, the processor and the storage medium may reside as discrete components in the user terminal.

In one or more exemplary designs, the said functions may be implemented in hardware, software, firmware, or any combination thereof. If implemented in software, each function can be stored on a computer-readable medium or transmitted over a computer-readable medium as one or more instructions or codes. Computer-readable media includes both computer storage media and communication media, the latter including any media that facilitates the transfer of a computer program from one place to another. The storage medium may be any available medium that can be accessed by a general-purpose or special-purpose computer.

The embodiments of this application are only intended for ease of description and to help comprehensive understanding of this application, and are not intended to limit the scope of this application. Therefore, it should be understood that, except for the embodiments disclosed herein, all modifications and changes or forms of modifications and changes derived from the technical idea of the present application fall within the scope of the present application.

### [CLAUSES]

### [Clause 1]

A method performed by a terminal device in a wireless communication system, the method comprising:
receiving cell configuration information from a network device, wherein the cell configuration information includes a first downlink configuration information and a first uplink configuration information, and further includes at least one of a second uplink configuration information or a second downlink configuration information; and
transmitting an uplink signal to the network device based on the cell configuration information,
wherein,
the first downlink configuration information is for configuring a first downlink,
the first uplink configuration information is for configuring a first uplink,
the second uplink configuration information is for configuring a second uplink, and
the second downlink configuration information is for configuring a second downlink,
wherein the first uplink and the first downlink are related in frequency domain,
wherein the second uplink satisfies at least one of the following conditions:
   the second uplink and the first downlink are related in frequency domain, or
   the second uplink and the first uplink are related in frequency domain,
   wherein the second downlink satisfies at least one of the following conditions:
      the second downlink and the first downlink are related in frequency domain, or
      the second downlink and the second uplink are related in frequency domain.

### [Clause 2]

The method of clause 1,
wherein the second uplink is related to cross division duplex, or
wherein the second uplink is related to subband non-overlapping full duplex.

### [Clause 3]

The method of clause 1,
wherein the second downlink is related to cross division duplex, or
wherein the second downlink is related to subband non-overlapping full duplex.

### [Clause 4]

The method of clause 1,
wherein the first uplink is related to one or more bandwidth parts (BWPs),
wherein the second uplink is related to one or more BWPs, and
wherein the second downlink is related to one or more BWPs.

### [Clause 5]

The method of clause 1, further includes:
determining a frequency domain information of the second uplink according to a domain information of the first downlink,
wherein the determining the frequency domain information of the second uplink according to the domain information of the first downlink comprises at least one of the following:
   determining a reference point in frequency domain for the second uplink according to a reference point in frequency domain for the first downlink;
   determining a frequency band of the second uplink according to a frequency band of the first downlink; or
   determining a carrier bandwidth of the second uplink according to a carrier bandwidth of the first downlink.

### [Clause 6]

The method of clause 1, further includes:
determining a frequency domain information of the second uplink according to a frequency domain information of the first uplink,
wherein the determining the frequency domain information of the second uplink according to the frequency domain information of the first uplink comprises at least one of the following:
   determining a reference point in frequency domain for the second uplink according to a reference point in frequency domain for the first uplink;
   determining a frequency band of the second uplink according to a frequency band of the first uplink; or
   determining a carrier bandwidth of the second uplink according to a carrier bandwidth of the first uplink.

### [Clause 7]

The method of clause 1, further includes:
performing at least one of the following operations in case that a first resource for transmitting a first uplink signal or channel on the first uplink and a second resource for transmitting a second uplink signal or channel on the second uplink overlap in the time domain:
transmitting the first uplink signal or channel;
transmitting the second uplink signal or channel;
dropping or not transmitting the first uplink signal or channel;
dropping or not transmitting the second uplink signal or channel; or
multiplexing uplink control information (UCI) corresponding to the first uplink signal or channel with the UCI corresponding to the second uplink signal or channel.

### [Clause 8]

The method of clause 1, further includes at least one of the following:
performing random access procedure on the first uplink or the second uplink;
calculating a radio network temporary identifier (RNTI) related to a random access channel (RACH) in association with the second uplink; or
determining a transmission power of the uplink signal or uplink channel on the second uplink based on a maximum output power of the terminal on the first uplink.

### [Clause 9]

The method of clause 1, further includes:
determining a frequency domain information of the second downlink according to a frequency domain information of the first downlink,
wherein the determining the frequency domain information of the second downlink comprises at least one of following:
   determining a reference point in frequency domain for the second downlink according to a reference point in frequency domain for the first downlink;
   determining a frequency band of the second downlink according to a frequency band of the first downlink; or
   determining a carrier bandwidth of the second downlink according to a carrier bandwidth of the first downlink.

### [Clause 10]

The method of clause 1, further includes:
determining a frequency domain information of the second downlink according to a frequency domain information of the second uplink,
wherein the determining the frequency domain information of the second downlink comprises at least one of the following:
   determining a reference point in frequency domain for the second uplink according to a reference point in frequency domain for the second uplink;
   determining a frequency band of the second downlink according to a frequency band of the second uplink; ordetermining a carrier bandwidth of the second downlink according to a carrier bandwidth of the second uplink.

### [Clause 11]

A terminal device in a wireless communication system, the terminal device comprising:
transceiver, and
controller, coupled to the transceiver and configured to:
   receive cell configuration information from a network device, wherein the cell configuration information includes a first downlink configuration information and a first uplink configuration information, and further includes at least one of a second uplink configuration information or a second downlink configuration information, and
   transmit an uplink signal to the network device based on the cell configuration information,
   wherein,
   the first downlink configuration information is for configuring a first downlink,
   the first uplink configuration information is for configuring a first uplink,
   the second uplink configuration information is for configuring a second uplink, and
   the second downlink configuration information is for configuring a second downlink,
   wherein the first uplink and the first downlink are related in frequency domain,
   wherein the second uplink satisfies at least one of the following conditions:
      the second uplink and the first downlink are related in frequency domain, or
      the second uplink and the first uplink are related in frequency domain,
      wherein the second downlink satisfies at least one of the following conditions:
         the second downlink and the first downlink are related in frequency domain, or
         the second downlink and the second uplink are related in frequency domain.

### [Clause 12]

The terminal device of clause 11,
wherein the controller is further configured to:
determine a frequency domain information of the second uplink according to a domain information of the first downlink,
wherein the controller is configured to perform at least one of the following in determining the frequency domain information of the second uplink:
   determine a reference point in frequency domain for the second uplink according to a reference point in frequency domain for the first downlink,
   determine a frequency band of the second uplink according to a frequency band of the first downlink, or
   determine a carrier bandwidth of the second uplink according to a carrier bandwidth of the first downlink.

### [Clause 13]

The terminal device of clause 11,
wherein the controller is further configured to:
determine a frequency domain information of the second uplink according to a frequency domain information of the first uplink,
wherein the controller is configured to perform at least one of the following in determining the frequency domain information of the second uplink:
   determine a reference point in frequency domain for the second uplink according to a reference point in frequency domain for the first uplink,
   determine a frequency band of the second uplink according to a frequency band of the first uplink, or
   determine a carrier bandwidth of the second uplink according to a carrier bandwidth of the first uplink.

### [Clause 14]

A method performed by a network device in a wireless communication system, the method comprising:
transmitting cell configuration information to a terminal device, wherein the cell configuration information includes a first downlink configuration information and a first uplink configuration information, and also includes at least one of a second uplink configuration information and a second downlink configuration information; and
receiving, from the terminal device, an uplink signal based on the cell configuration information,
wherein,
the first downlink configuration information is for configuring a first downlink,
the first uplink configuration information is for configuring a first uplink,
the second uplink configuration information is for configuring a second uplink, and
the second downlink configuration information is for configuring a second downlink,
wherein the first uplink and the first downlink are related in frequency domain,
wherein the second uplink satisfies at least one of the following conditions:
   the second uplink and the first downlink are related in frequency domain, or
   the second uplink and the first uplink are related in frequency domain,
   wherein the second downlink satisfies at least one of the following conditions:
      the second downlink and the first downlink are related in frequency domain, or
      the second downlink and the second uplink are related in frequency domain.

### [Clause 15]

A network device in a wireless communication system, the network device comprising:
transceiver, and
controller, coupled to the transceiver and configured to:
   transmit cell configuration information to a terminal device, wherein the cell configuration information includes a first downlink configuration information and a first uplink configuration information, and also includes at least one of a second uplink configuration information and a second downlink configuration information, and
   receive, from the terminal device, an uplink signal based on the cell configuration information,
   wherein,
   the first downlink configuration information is for configuring a first downlink,
   the first uplink configuration information is for configuring a first uplink,
   the second uplink configuration information is for configuring a second uplink, and
   the second downlink configuration information is for configuring a second downlink,
   wherein the first uplink and the first downlink are related in frequency domain,
   wherein the second uplink satisfies at least one of the following conditions:
      the second uplink and the first downlink are related in frequency domain, or
      the second uplink and the first uplink are related in frequency domain,
      wherein the second downlink satisfies at least one of the following conditions:
         the second downlink and the first downlink are related in frequency domain, or
         the second downlink and the second uplink are related in frequency domain.

### [Clause 1]

A method performed by a user equipment (116), UE, the method comprising:
receiving, from a base station (102), a first configuration for first random access resources, a second configuration for second random access resources, and threshold information on sub-band full duplex, SBFD, wherein the second random access resources are associated with SBFD;
identifying a random access resource for a first physical random access channel, PRACH, associated with either the first random access resources or the second random access resources based on the threshold information; and
transmitting, to the base station (102), the first PRACH in the random access resource for the first PRACH.

### [Clause 2]

The method of clause 1,
wherein the random access resource for the first PRACH is associated with the second random access resources in case that a downlink pathloss reference reference signal received power, RSRP, is below a threshold value indicated by the threshold information,
wherein the random access resource for the first PRACH is associated with the first random access resources in case that the downlink pathloss reference RSRP is not below the threshold value.

### [Clause 3]

The method of clause 1, further comprising:
identifying a random access resource for a second PRACH associated with either the first random access resources or the second random access resources based on downlink control information, DCI; and
transmitting, to the base station (102), the second PRACH in the random access resource for the second PRACH,
wherein the DCI indicates whether the UE (116) uses the random access resource for the second PRACH associated with either the first random access resources or the second random access resources.

### [Clause 4]

The method of clause 1, wherein the first random access resources are associated with an uplink, UL, carrier and the second random access resources are associated with an UL subband,
wherein the UL subband is associated with SBFD,
wherein the UL carrier and the UL subband are based on an offset in relation to point A.

### [Clause 5]

A method performed by a base station (102) in a wireless communication system, the method comprising:
transmitting, to a user equipment, UE (116), a first configuration for first random access resources, a second configuration for second random access resources, and threshold information on sub-band full duplex, SBFD;
receiving, from the UE, a first physical random access channel, PRACH, in a random access resource for the first PRACH,
wherein the random access resource for the first PRACH is associated with either first random access resources or second random access resources based on the threshold information,
wherein the second random access resources are associated with sub-band full duplex, SBFD.

### [Clause 6]

The method of clause 5,
wherein the random access resource for the first PRACH is associated with the second random access resources in case that a downlink pathloss reference reference signal received power, RSRP, is below a threshold value indicated by the threshold information,
wherein the random access resource for the first PRACH is associated with the first random access resources in case that the a downlink pathloss reference RSRP is not below the threshold value.

### [Clause 7]

The method of clause 5, further comprising:
receiving, from the UE, a second PRACH in a random access resource for the second PRACH,
wherein downlink control information, DCI, indicates whether the user equipment (116), UE, uses the random access resource for the second PRACH associated with either the first random access resources or the second random access resources.

### [Clause 8]

The method of clause 5, wherein the first random access resources are associated with an uplink, UL, carrier and the second random access resources are associated with an UL subband,
wherein the UL subband is associated with SBFD,
wherein the UL carrier and the UL subband are based on an offset in relation to point A.

### [Clause 9]

A user equipment (116), UE, in a wireless communication system, the terminal device comprising:
transceiver, and
controller, coupled to the transceiver and configured to:
   receive, from a base station (102), a first configuration for first random access resources, a second configuration for second random access resources, and threshold information on sub-band full duplex, SBFD, wherein the second random access resources are associated with SBFD,
   identify a random access resource for a first physical random access channel, PRACH, associated with either the first random access resources or the second random access resources based on the threshold information, and
   transmit, to the base station (102), the first PRACH, in the random access resource for the first PRACH.

### [Clause 10]

The UE (116) of clause 9,
wherein the random access resource for the first PRACH is associated with the second random access resources in case that a downlink pathloss reference reference signal received power, RSRP, is below a threshold value indicated by the threshold information,
wherein the random access resource for the first PRACH is associated with the first random access resources in case that the downlink pathloss reference RSRP is not below the threshold value.

### [Clause 11]

The UE (116) of clause 9, wherein the controller is configured to:
identify a random access resource for a second PRACH associated with either the first random access resources or the second random access resources based on downlink control information, DCI; and
transmit, to the base station (102), the second PRACH in the random access resource for the second PRACH
wherein the DCI indicates whether the UE (116) uses the random access resource for the second PRACH associated with either the first random access resources or the second random access resources.

### [Clause 12]

The UE (116) of clause 9, wherein the first random access resources are associated with an uplink, UL, carrier and the second random access resources are associated with an UL subband,
wherein the UL subband is associated with SBFD,
wherein the UL carrier and the UL subband are based on an offset in relation to point A.

### [Clause 13]

A base station (102) in a wireless communication system, the base station (102) comprising:
transceiver, and
controller, coupled to the transceiver and configured to:
   transmit, to a user equipment, UE (116), a first configuration for first random access resources, a second configuration for second random access resources, and threshold information on sub-band full duplex, SBFD,
   receive, from the UE (116), a first physical random access channel, PRACH, in a random access resource for the first PRACH,
   wherein the random access resource for the first PRACH is associated with either first random access resources or second random access resources based on the threshold information,
   wherein the second random access resources are associated with sub-band full duplex, SBFD.

### [Clause 14]

The base station (102) of clause 13,
wherein the random access resource for the first PRACH is associated with the second random access resources in case that a downlink pathloss reference reference signal received power, RSRP, is below a threshold value indicated by the threshold information,
wherein the random access resource for the first PRACH is associated with the first random access resources in case that the downlink pathloss reference RSRP is not below the threshold value.

### [Clause 15]

The base station (102) of clause 13, wherein the controller is configured to:
receive, from the UE (116), a second PRACH in a random access resource for the second PRACH,
wherein downlink control information, DCI, indicates whether the UE (116) uses the random access resource for the second PRACH associated with either the first random access resources or the second random access resources.

The above are only the preferred embodiments of the present invention and are not intended to limit the present invention. Any modification, equivalent replacement, improvement, etc. made within the spirit and principle of the present invention shall be included within the scope of protection of the present invention.

## Claims

1. A method performed by a user equipment (116), UE, the method comprising:
receiving uplink, UL, configuration information including first frequency domain information for a UL carrier and second frequency domain information for a UL subband;
identifying first UL resources of the UL carrier based on the first frequency domain information;
identifying second UL resources of the UL subband associated with sub-band full duplex, SBFD, based on the second frequency domain information;
transmitting a UL signal on the first UL resources or the second UL resources,
wherein the first UL resources and the second UL resources are identified in relation to a first frequency domain reference point.

2. The method of claim 1, further comprising:
receiving downlink, DL, configuration information including third frequency domain information for a DL carrier and fourth frequency domain information for a DL subband;
identifying first DL resources of the DL carrier based on the third frequency domain information;
identifying second DL resources of the DL subband associated with SBFD based on the fourth frequency domain information;
receiving a DL signal on the first DL resources or the second DL resources,
wherein the first DL resources and the second DL resources are identified in relation to a second frequency domain reference point.

3. The method of claim 2,
wherein the first frequency domain reference point and the second frequency domain reference point are same.

4. The method of claim 2,
wherein the UL configuration information and the DL configuration information are included in cell configuration information.

5. A method performed by a base station (102), the method comprising:
transmitting uplink, UL, configuration information including first frequency domain information for a UL carrier and second frequency domain information for a UL subband; and
receiving a UL signal on first UL resources of the UL carrier or second UL resources of the UL subband associated with sub-band full duplex, SBFD,
wherein the first UL resources are based on the first frequency domain information,
wherein the second UL resources are based on the second frequency domain information,
wherein the first UL resources and the second UL resources are identified in relation to a first frequency domain reference point.

6. The method of claim 5, further comprising:
transmitting downlink, DL, configuration information including third frequency domain information for a DL carrier and fourth frequency domain information for a DL subband;
transmitting a DL signal on first DL resources of the DL carrier or second DL resources of the DL subband associated with SBFD,
wherein the first DL resources are based on the third frequency domain information,
wherein the second DL resources are based on the fourth frequency domain information,
wherein the first DL resources and the second DL resources are identified in relation to a second frequency domain reference point.

7. The method of claim 6,
wherein the first frequency domain reference point and the second frequency domain reference point are same.

8. The method of claim 6,
wherein the UL configuration information and the DL configuration information are included in cell configuration information.

9. A user equipment (116), UE, in a wireless communication system, the UE comprising:
a transceiver; and
a controller, coupled to the transceiver and configured to:
receive uplink, UL, configuration information including first frequency domain information for a UL carrier and second frequency domain information for a UL subband,
identify first UL resources of the UL carrier based on the first frequency domain information,
identify second UL resources of the UL subband associated with sub-band full duplex, SBFD, based on the second frequency domain information, and
transmit a UL signal on the first UL resources or the second UL resources,
wherein the first UL resources and the second UL resources are identified in relation to a first frequency domain reference point.

10. The UE of claim 9,
wherein the controller is further configured to:
receive downlink, DL, configuration information including third frequency domain information for a DL carrier and fourth frequency domain information for a DL subband,
identify first DL resources of the DL carrier based on the third frequency domain information,
identify second DL resources of the DL subband associated with SBFD based on the fourth frequency domain information, and
receive a DL signal on the first DL resources or the second DL resources,
wherein the first DL resources and the second DL resources are identified in relation to a second frequency domain reference point.

11. The UE of claim 10,
wherein the first frequency domain reference point and the second frequency domain reference point are same.

12. The UE of claim 10,
wherein the UL configuration information and the DL configuration information are included in cell configuration information.

13. A base station (102), in a wireless communication system, the base station comprising:
a transceiver; and
a controller, coupled to the transceiver and configured to:
transmit uplink, UL, configuration information including first frequency domain information for a UL carrier and second frequency domain information for a UL subband, and
receive a UL signal on first UL resources of the UL carrier or second UL resources of the UL subband associated with sub-band full duplex, SBFD,
wherein the first UL resources are based on the first frequency domain information,
wherein the second UL resources are based on the second frequency domain information,
wherein the first UL resources and the second UL resources are identified in relation to a first frequency domain reference point.

14. The base station of claim 13,
wherein the controller is further configured to:
transmit downlink, DL, configuration information including third frequency domain information for a DL carrier and fourth frequency domain information for a DL subband, and
transmit a DL signal on first DL resources of the DL carrier or second DL resources of the DL subband associated with SBFD,
wherein the first DL resources are based on the third frequency domain information,
wherein the second DL resources are based on the fourth frequency domain information,
wherein the first DL resources and the second DL resources are identified in relation to a second frequency domain reference point.

15. The base station of claim 14,
wherein the first frequency domain reference point and the second frequency domain reference point are same.
